(19) Europäisches Patentamt
European Patent Office
Office européen des brevets

(11) **EP 3 423 949 B1**

(12) **EUROPÄISCHE PATENTSCHRIFT**

(45) Veröffentlichungstag und Bekanntmachung des Hinweises auf die Patenterteilung:
**26.08.2020   Patentblatt 2020/35**

(21) Anmeldenummer: **17706729.5**

(22) Anmeldetag: **21.02.2017**

(51) Int Cl.:
***G06F 13/30*** (2006.01)

(86) Internationale Anmeldenummer:
**PCT/EP2017/053901**

(87) Internationale Veröffentlichungsnummer:
**WO 2017/148743 (08.09.2017 Gazette 2017/36)**

(54) **SPEICHERDIREKTZUGRIFFSSTEUEREINRICHTUNG FÜR EINE EINEN ARBEITSSPEICHER AUFWEISENDE RECHENEINHEIT**

DIRECT MEMORY ACCESS CONTROL DEVICE FOR A COMPUTING UNIT HAVING A MAIN MEMORY

DISPOSITIF DE COMMANDE D'ACCÈS DIRECT EN MÉMOIRE POUR UNE UNITÉ DE CALCUL COMPRENANT UNE MÉMOIRE DE TRAVAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2016   DE 102016203307**

(43) Veröffentlichungstag der Anmeldung:
**09.01.2019   Patentblatt 2019/02**

(73) Patentinhaber: **Robert Bosch GmbH**
**70442 Stuttgart (DE)**

(72) Erfinder:
• SCHLOTTMANN, Eckart
71563 Affalterbach (DE)
• AUE, Axel
70825 Korntal-Muenchingen (DE)
• BECKER, Eugen
71640 Ludwigsburg (DE)

(56) Entgegenhaltungen:
US-A1- 2006 259 656    US-A1- 2008 183 913

EP 3 423 949 B1

**Beschreibung**

Stand der Technik

Die Erfindung betrifft eine Speicherdirektzugriffssteuereinrichtung nach dem Oberbegriff des Anspruchs 1, sowie ein Verfahren nach dem nebengeordneten Patentanspruch.

Vom Markt her bekannt sind Recheneinheiten, beispielsweise Prozessoren, welche einen oder mehrere Prozessorkerne aufweisen, und welche auf einen Arbeitsspeicher zugreifen können. Weiterhin umfassen Rechnersysteme, welche eine oder mehrere solcher Recheneinheiten aufweisen, üblicherweise eine Mehrzahl von weiteren mit der Recheneinheit zusammenwirkenden Einheiten, beispielsweise Eingabe- und Ausgabebausteine ("IO") und dergleichen. Zumindest einige der besagten Elemente des Rechnersystems können über einen gemeinsamen, bevorzugt parallelen, Bus miteinander Daten austauschen. Weiterhin sind Verfahren für einen so genannten Speicherdirektzugriff, DMA, englisch "direct memory access" bekannt, wodurch der Datenaustausch über den gemeinsamen Bus verbessert werden kann.

Die US 2006/259656 A1 offenbart ein Simulieren mehrerer virtueller Kanäle in Switching-Fabric-Netzwerken.

Offenbarung der Erfindung

Das der Erfindung zugrunde liegende Problem wird durch eine Speicherdirektzugriffssteuereinrichtung nach Anspruch 1, sowie durch ein Verfahren nach dem nebengeordneten Anspruch gelöst. Vorteilhafte Weiterbildungen sind in den Unteransprüchen angegeben.

Die Erfindung betrifft eine Speicherdirektzugriffssteuereinrichtung für eine einen Arbeitsspeicher aufweisende Recheneinheit, wobei die Speicherdirektzugriffssteuereinrichtung einen Anschluss zur Verbindung der Speicherdirektzugriffssteuereinrichtung mit einem die Recheneinheit mit dem Arbeitsspeicher verbindenden Bussystem aufweist. Dabei ist die Speicherdirektzugriffssteuereinrichtung zur Ausführung der folgenden Schritte ausgebildet:

- Einlesen von Steuerinformationen von wenigstens zwei in dem Arbeitsspeicher gespeicherten Informationsblöcken, welche von der Recheneinheit zur Übertragung an ein mit dem Bussystem verbundenes Kommunikationsmodul vorgesehen sind, wobei die Steuerinformationen eine Priorität des jeweiligen Informationsblocks für die Übertragung an das Kommunikationsmodul charakterisieren,
- Ermitteln einer Reihenfolge für die Übertragung der Informationsblöcke zu dem Kommunikationsmodul in Abhängigkeit der jeweiligen Priorität,
- Übertragen der Informationsblöcke von dem Arbeitsspeicher zu dem Kommunikationsmodul gemäß der ermittelten Reihenfolge unter Verwendung eines Speicherdirektzugriffs von dem Arbeitsspeicher zu dem Kommunikationsmodul.

Die derart beschriebene Übertragung der Informationsblöcke charakterisiert vorliegend einen so genannten "Tx-Betrieb", also von dem Arbeitsspeicher hin zu dem Kommunikationsmodul.

Die besagten Informationsblöcke können "Nutzdaten" und/oder Steuerinformationen umfassen und beispielsweise auch ganze Datenpakete bilden, wie sie durch das Kommunikationsmodul über ein Bussystem und/oder ein Datennetzwerk mit anderen Einheiten ausgetauscht werden können. Die Recheneinheit kann einen oder mehrere Prozessorkerne (Rechenkerne) umfassen, wobei die Prozessorkerne nachfolgend auch als Recheneinheiten bezeichnet werden. Die Prozessorkerne bzw. die Recheneinheiten können in einem gemeinsamen Bauelement (integrierte Schaltung) oder in jeweils getrennten Bauelementen angeordnet sein.

Der Arbeitsspeicher kann als zentraler Arbeitsspeicher ausgeführt sein, welcher von den Prozessorkernen gemeinsam nutzbar ist, und/oder es kann auch für jeden der Prozessorkerne eine jeweils zugehörige Arbeitsspeicher-Einheit vorgesehen sein. Diese Arbeitsspeicher-Einheit kann zusammen mit dem jeweiligen Prozessorkern in einem gemeinsamen Bauelement angeordnet sein ("intern") oder physisch davon getrennt sein ("extern").

Vorzugsweise ist die Speicherdirektzugriffssteuereinrichtung mittels Hardware ausgeführt, also mittels eines oder mehrerer diskreter und/oder integrierter elektronischer Bauelemente.

In einer Ausgestaltung ist die Speicherdirektzugriffssteuereinrichtung eine separate Einheit, welche ergänzend zu einer nach dem Stand der Technik vorbekannten Speicherdirektzugriffssteuereinrichtung verwendet wird.

In einer Ausgestaltung ist das Kommunikationsmodul dazu ausgebildet, ein CAN-Bussystem funktional mit der Recheneinheit bzw. den Recheneinheiten, sowie mit dem Arbeitsspeicher bzw. den Arbeitsspeicher-Einheiten zu koppeln. In einer Ausgestaltung umfasst das Kommunikationsmodul ein so genanntes "MCAN-Modul", welches mit einem CAN-Bus kommunizieren kann, an welchem eine Mehrzahl von vorliegend als "logische Einheiten" bezeichnete CAN-Bus-Teilnehmer angeschlossen sind. Die Abkürzung "CAN" bedeutet "Controller Area Network". Der Buchstabe "M" charakterisiert einen herstellerspezifischen Namenszusatz.

In einer bevorzugten Ausgestaltung ist der Arbeitsspeicher jeweils als Speicher mit wahlfreiem Zugriff, RAM, englisch "random access memory", ausgeführt. Es sind jedoch auch andere Speicherarten möglich.

In einer Ausgestaltung ist die Speicherdirektzugriffssteuereinrichtung dazu ausgebildet zu ermitteln, welcher Informationsblock jeweils die größte Priorität aufweist. Entsprechend erfolgt ein Übertragen des Informationsblocks mit der größten Priorität unter Verwendung eines Speicherdirektzugriffs von dem Arbeitsspeicher zu dem Kommunikationsmodul.

Vereinfacht ausgedrückt führt die Speicherdirektzugriffssteuereinrichtung die Übertragung der Informationsblöcke abhängig von Informations- bzw. Dateninhalten insbesondere der Informationsblöcke durch und entscheidet selbsttätig, welche Übertragung jeweils als nächste durchgeführt wird.

Die Erfindung weist den Vorteil auf, dass in einem Rechnersystem, welches mindestens eine Recheneinheit bzw. mindestens einen Prozessorkern, sowie einen oder mehrere Arbeitsspeicher und mindestens ein Kommunikationsmodul aufweist, eine mittels eines Speicherdirektzugriffs durchgeführte Übertragung von Informationsblöcken zusätzlich verbessert werden kann.

Ein weiterer Vorteil ist, dass die Speicherdirektzugriffssteuereinrichtung die Leistung von solchen Kommunikationsmodulen erhöht, die nicht explizit zum Betrieb mit einem so genannten "Multicore-System" (also eine Recheneinheit mit mehreren Prozessorkernen) ausgelegt worden sind, sondern nur mit dem Designziel der Kommunikation mit einem Prozessorkern entwickelt wurden. Vergleiche beispielsweise das weiter oben beschriebene "MCAN-Modul". Auf diese Weise ermöglicht das erfindungsgemäße Prinzip eine einfache, auf Speicherdirektzugriffen basierende, Anbindung eines MCAN Moduls auch an Recheneinheiten mit mehreren Prozessorkernen. Somit werden die Anwendungsmöglichkeiten entsprechend erweitert.

Auch dann, wenn die besagten Kommunikationsmodule nicht als physisches Bauteil vorliegen, sondern lediglich mittels Hardware und/oder Software emuliert werden, ist dank der Speicherdirektzugriffssteuereinrichtung ein Betrieb auch mit Multicore-Systemen vorteilhaft möglich.

In einer Ausgestaltung ist die Speicherdirektzugriffssteuereinrichtung zur Ausführung mindestens eines der folgenden weiteren Schritte ausgebildet:

- Empfangen eines Signals, insbesondere eines Triggersignals, von der Recheneinheit,
- Einlesen der Steuerinformationen in Abhängigkeit von dem empfangenen Signal. Beispielsweise umfassen die Informationsblöcke bzw. die Steuerinformationen jeweils eine Bitposition für das Triggersignal, wobei die Speicherdirektzugriffssteuereinrichtung dazu ausgebildet ist, entsprechende Bitpositionen in dem Arbeitsspeicher regelmäßig abzufragen, ob das jeweilige Triggersignals durch die Recheneinheit gesetzt ist oder nicht. Sobald das Triggersignals als gesetzt ermittelt wird, erkennt die Speicherdirektzugriffssteuereinrichtung daraus, dass der betreffende Informationsblock zu dem Kommunikationsmodul übertragen werden soll.
- Auswerten von eine Prioritätsauswertung steuernden ersten Konfigurationsinformationen,
- Ermitteln einer ersten Priorität und/oder einer zweiten Priorität aus den Steuerinformationen,
- Ermitteln der Reihenfolge für die Übertragung der Informationsblöcke zu dem Kommunikationsmodul in Abhängigkeit von den ersten Konfigurationsinformationen und von den jeweiligen ersten und/oder jeweiligen zweiten Prioritäten, wobei die Reihenfolge optional in Abhängigkeit von den jeweiligen ersten Prioritäten oder von den jeweiligen zweiten Prioritäten oder von den jeweiligen ersten und jeweiligen zweiten Prioritäten ermittelt wird, insbesondere Ermitteln der Reihenfolge für die Übertragung der Informationsblöcke zu dem Kommunikationsmodul in Abhängigkeit der jeweiligen ersten Priorität, wenn die jeweiligen ersten Prioritäten verschieden sind, oder in Abhängigkeit der jeweiligen zweiten Priorität, wenn die jeweiligen ersten Prioritäten gleich sind,
- Übermitteln einer Übertragungs-Anfrage ("Request"), von der Speicherdirektzugriffssteuereinrichtung an das Kommunikationsmodul,
- Senden eines Quittungssignals an die Recheneinheit und/oder Setzen bzw. Rücksetzen eines Flags in einem Informationsblock für eine erfolgreiche Übertragung des Informationsblocks von dem Arbeitsspeicher zu dem Kommunikationsmodul.

In einer Ausgestaltung ist das Quittungssignal das oben beschriebene ACK-Bit, welches von der Recheneinheit gesetzt werden kann, wodurch die Speicherdirektzugriffssteuereinrichtung dazu veranlasst werden kann, das Einlesen der Steuerinformationen nachfolgend durchzuführen. Das Senden des Quittungssignals entspricht dann einem Rücksetzen des ACK-Bits durch die Speicherdirektzugriffssteuereinrichtung. In einer weiteren Ausgestaltung ist das ACK-Bit bzw. eine Bitposition des ACK-Bits von dem Flag bzw. einer Bitposition des Flags verschieden.

Bei einer vorteilhaften Ausführungsform kann das Quittungssignal dazu vorgesehen sein, anzuzeigen, dass Daten erfolgreich an das Kommunikationsmodul, z.B. ein MCAN-Modul, zum Senden (inkl. Tx Request) übergeben worden sind. Hierzu kann die Speicherdirektzugriffssteuereinrichtung ein Bit in der Nachricht für die CPU (z.B. Intern_TransSuccess) setzen.

Bei einer weiteren vorteilhaften Ausführungsform überträgt die Speicherdirektzugriffssteuereinrichtung die Nachricht an das Kommunikationsmodul, z.B. ein MCAN Modul, und setzt dazu z.B. einen Tx Request. Nach einem erfolgreichen Versenden durch das MCAN Modul setzt das MCAN Modul das entsprechende eigene Bit im MCAN Modul, und erst jetzt überträgt die Speicherdirektzugriffssteuereinrichtung ein Quittungssignal an die CPU, demzufolge die Übertragung erfolgreich abgeschlossen ist. Dies kann über das vorstehend bereits beschriebene ACK Bit erfolgen.

Die besagten weiteren Schritte können die Kommunikation zwischen der Recheneinheit bzw. den Recheneinheiten, dem Arbeitsspeicher bzw. den Arbeitsspeicher-Einheiten, der Speicherdirektzugriffssteuereinrichtung, und/oder dem Kommunikationsmodul vorteilhaft verbessern.

Die besagten ersten Konfigurationsinformationen können die optionale Verwendung der ersten und/oder zweiten Prioritäten vorteilhaft steuern.

Die zweite Priorität kann beispielsweise mittels einer oder mehrerer Bitpositionen ("Bitfeld") in einem jeweiligen Informationsblock definiert sein, beispielsweise in einer Kopfzeile ("header") des Informationsblocks. Besonders bevorzugt sind diese Bits jedoch als Zusatzinformationen zu einer CAN Nachricht vorgesehen, die in der CAN Nachricht selbst nicht enthalten sind - also reine Steuerinformation.

Vorzugsweise werden die erste und/oder die zweite Priorität in den Steuerinformationen des jeweiligen Informationsblocks übertragen. In einer Ausgestaltung erfolgt das Ermitteln der Reihenfolge in Abhängigkeit von den ersten Konfigurationsinformationen ausschließlich mittels der ersten Priorität. In einer weiteren Ausgestaltung erfolgt das Ermitteln der Reihenfolge in Abhängigkeit von den ersten Konfigurationsinformationen ausschließlich mittels der zweiten Priorität.

In einer weiteren Ausgestaltung ist die Speicherdirektzugriffssteuereinrichtung zur Ausführung der folgenden Schritte ausgebildet:

- Einlesen von Steuerinformationen von wenigstens zwei von dem Kommunikationsmodul bereit gestellten Informationsblöcken, welche von dem Kommunikationsmodul zur Übertragung an den mit dem Bussystem verbundenen Arbeitsspeicher vorgesehen sind, wobei diese Steuerinformationen eine Priorität des jeweiligen Informationsblocks für die Übertragung an den Arbeitsspeicher charakterisieren,
- Ermitteln einer Reihenfolge für die Übertragung der Informationsblöcke zu dem Arbeitsspeicher in Abhängigkeit der jeweiligen Priorität,
- Übertragen der Informationsblöcke von dem Kommunikationsmodul zu dem Arbeitsspeicher gemäß der ermittelten Reihenfolge unter Verwendung eines Speicherdirektzugriffs von dem Kommunikationsmodul zu dem Arbeitsspeicher.

Bei einer weiteren Anwendung, bei der z.B. nur ein Rx Buffer (Empfangspuffer) in einem MCAN Modul konfiguriert wird, reicht ein Trigger zur Übertragung aus dem MCAN Modul zum RAM aus. Dies kann beispielsweise ein NEWDATA Flag im MCAN Modul sein. In diesen Fällen kann auch auf eine Prioritätssteuerung verzichtet werden.

Die derart beschriebene Übertragung der Informationsblöcke charakterisiert vorliegend einen so genannten "Rx-Betrieb", also von dem Kommunikationsmodul hin zu dem Arbeitsspeicher. Es ergeben sich vergleichbare Vorteile, wie es weiter oben für den "Tx-Betrieb" bereits beschrieben wurde.

In einer weiteren Ausgestaltung ist die Speicherdirektzugriffssteuereinrichtung zur Ausführung mindestens eines der folgenden weiteren Schritte ausgebildet:

- Empfangen eines Signals, insbesondere eines Triggersignals, von dem Kommunikationsmodul, wodurch die Speicherdirektzugriffssteuereinrichtung veranlasst werden kann, das Einlesen der Steuerinformationen nachfolgend durchzuführen,
- Einlesen der Steuerinformationen, insbesondere von den wenigstens zwei von dem Kommunikationsmodul bereit gestellten Informationsblöcken, in Abhängigkeit von dem empfangenen Signal,
- Auswerten von eine Prioritätsauswertung steuernden ersten Konfigurationsinformationen,
- Ermitteln einer ersten Priorität und/oder einer zweiten Priorität aus den Steuerinformationen,
- Ermitteln der Reihenfolge für die Übertragung der Informationsblöcke zu dem Arbeitsspeicher in Abhängigkeit von den ersten Konfigurationsinformationen und von den jeweiligen ersten und/oder jeweiligen zweiten Prioritäten, wobei die Reihenfolge optional in Abhängigkeit von den jeweiligen ersten Prioritäten oder von den jeweiligen zweiten Prioritäten oder von den jeweiligen ersten und jeweiligen zweiten Prioritäten ermittelt wird, insbesondere Ermitteln der Reihenfolge für die Übertragung der Informationsblöcke zu dem Arbeitsspeicher in Abhängigkeit der jeweiligen ersten Priorität, wenn die jeweiligen ersten Prioritäten verschieden sind, oder in Abhängigkeit der jeweiligen zweiten Priorität, wenn die jeweiligen ersten Prioritäten gleich sind,
- Setzen eines Flags, insbesondere eines New-Flags, in einem zu übertragenden Informationsblock, und/oder Senden eines Interrupts an die Recheneinheit, wobei das New-Flag bzw. der Interrupt dazu vorgesehen ist, der Recheneinheit eine erfolgte Übertragung des Informationsblocks an den Arbeitsspeicher mitzuteilen,
- Ermitteln eines Ziel-Adressbereichs in dem Arbeitsspeicher und/oder Ermitteln einer lokalen Arbeitsspeicher-Einheit des Arbeitsspeichers,

- Senden eines Quittungssignals an das und/oder Setzen eines Flags in dem Kommunikationsmodul für eine erfolgreiche Übertragung eines Informationsblocks von dem Kommunikationsmodul zu dem Arbeitsspeicher.

Mittels des lokalen Interrupts an die Recheneinheit wird es ermöglicht, dass diese sofort reagieren kann, wenn ein jeweiliger von dem Kommunikationsmodul zu sendender Informationsblock möglichst schnell in den Arbeitsspeicher übertragen werden soll. Die Recheneinheit kann durch den lokalen Interupt vorteilhaft die bereits kopierten Daten möglichst schnell verarbeiten und braucht dabei insbesondere keine Zugriffe mehr in einen entfernten Speicher.

Die besagten weiteren Schritte können die Kommunikation zwischen der Recheneinheit bzw. den Recheneinheiten, dem Arbeitsspeicher bzw. den Arbeitsspeicher-Einheiten, der Speicherdirektzugriffssteuereinrichtung, und/oder dem Kommunikationsmodul vorteilhaft verbessern. Ebenso ermöglicht die Verwendung der (optionalen) zweiten Priorität eine zusätzliche Verbesserung beim Ermitteln der Reihenfolge.

In einer Ausgestaltung können die besagten "ersten" Konfigurationsinformationen für den Rx-Betrieb einen anderen Inhalt aufweisen als die weiter oben beschriebenen "ersten" Konfigurationsinformationen für den Tx-Betrieb. In einer weiteren Ausgestaltung erfolgt das Ermitteln der Reihenfolge in Abhängigkeit von den ersten Konfigurationsinformationen ausschließlich mittels der ersten Priorität. In einer weiteren Ausgestaltung erfolgt das Ermitteln der Reihenfolge in Abhängigkeit von den ersten Konfigurationsinformationen ausschließlich mittels der zweiten Priorität.

In einer weiteren Ausgestaltung ist die Speicherdirektzugriffssteuereinrichtung zur Ausführung der folgenden Schritte ausgebildet:

- Einlesen von Steuerinformationen von wenigstens einem in dem Arbeitsspeicher gespeicherten ersten Informationsblock, welcher von der Recheneinheit zur Übertragung an das mit dem Bussystem verbundene Kommunikationsmodul vorgesehen ist, wobei die Steuerinformationen eine Priorität des wenigstens einen ersten Informationsblocks für die Übertragung an das Kommunikationsmodul charakterisieren,
- Einlesen von Steuerinformationen von wenigstens einem von dem Kommunikationsmodul bereit gestellten zweiten Informationsblock, welcher von dem Kommunikationsmodul zur Übertragung an den mit dem Bussystem verbundenen Arbeitsspeicher vorgesehen ist, wobei diese Steuerinformationen eine Priorität des wenigstens einen zweiten Informationsblocks für die Übertragung an den Arbeitsspeicher charakterisieren,
- Ermitteln einer Reihenfolge für die Übertragung des wenigstens einen ersten Informationsblocks und des wenigstens einen zweiten Informationsblocks in Abhängigkeit der jeweiligen Priorität des wenigstens einen ersten und wenigstens einen zweiten Informationsblocks,
- Übertragen des wenigstens einen ersten Informationsblocks von dem Arbeitsspeicher zu dem Kommunikationsmodul und/oder Übertragen des wenigstens einen zweiten Informationsblocks von dem Kommunikationsmodul zu dem Arbeitsspeicher gemäß der ermittelten Reihenfolge unter Verwendung eines Speicherdirektzugriffs.

Die derart beschriebene Übertragung der Informationsblöcke charakterisiert vorliegend einen gemischten "Tx-Betrieb" und "Rx-Betrieb", also einerseits von dem Arbeitsspeicher hin zu dem Kommunikationsmodul, und andererseits von dem Kommunikationsmodul hin zu dem Arbeitsspeicher. Weil auf dem Bussystem mittels des Speicherdirektzugriffs zu einer jeweiligen Zeit immer nur ein Informationsblock übertragen werden kann, wird durch die beschriebenen Schritte vorteilhaft eine Priorisierung für beide Übertragungsrichtungen durchgeführt. Innerhalb einer jeweiligen Übertragungsrichtung erfolgt ebenfalls eine Priorisierung, wie es weiter oben bereits für den Tx-Betrieb und den Rx-Betrieb beschrieben wurde.

Somit ist die Speicherdirektzugriffssteuereinrichtung dazu ausgebildet, einerseits die Reihenfolge für den Tx-Betrieb und andererseits die Reihenfolge für den Rx-Betrieb zu ermitteln, und daraus folgend auch eine Priorisierung zwischen dem Tx-Betrieb und dem Rx-Betrieb durchzuführen. Mit anderen Worten: Die Speicherdirektzugriffssteuereinrichtung gibt demjenigen Informationsblock den Vorrang, welcher insgesamt am dringlichsten ist.

Es ergeben sich entsprechende Vorteile, wie es weiter oben für den Tx-Betrieb und den Rx-Betrieb bereits beschrieben wurde. Dabei versteht es sich, dass auch für den gemischten Tx-Betrieb und Rx-Betrieb die oben jeweils getrennt für den Tx-Betrieb und den Rx-Betrieb beschriebenen "weiteren" Schritte, soweit anwendbar, vorteilhaft für die Speicherdirektzugriffssteuereinrichtung ergänzt werden können.

In einer weiteren Ausgestaltung umfasst die Speicherdirektzugriffssteuereinrichtung zweite Konfigurationsinformationen, wobei die zweiten Konfigurationsinformationen jeweilige mit dem Kommunikationsmodul kommunizierende logische Einheiten und/oder von den jeweiligen logischen Einheiten zu sendende und/oder zu empfangene Steuerinformationen charakterisieren. Dadurch kann das Ermitteln der Reihenfolge vorteilhaft verbessert werden. In einer Ausgestaltung ist das Kommunikationsmodul zur Kopplung mit einem CAN-Bussystem ausgebildet, wobei die besagten zweiten Konfigurationsinformationen jeweilige CAN-IDs bzw. CAN-Objekt-Identifier umfassen. In einer weiteren Ausgestaltung umfassen die zweiten Konfigurationsinformationen nur die für den Rx-Betrieb erforderlichen CAN-IDs.

In einer weiteren Ausgestaltung umfasst die Speicherdirektzugriffssteuereinrichtung dritte Konfigurationsinformationen, wobei die dritten Konfigurationsinformationen die Recheneinheit (bzw. die Recheneinheiten bzw. Prozessorkerne) und/oder den Arbeitsspeicher (bzw. die Arbeitsspeicher-Einheiten) charakterisierende Größen umfassen, beispielsweise eine so genannte "CPU-Nummer". Dadurch kann das Ermitteln der Reihenfolge ebenfalls vorteilhaft verbessert werden. In einer weiteren Ausgestaltung umfassen die dritten Konfigurationsinformationen nur die für den Rx-Betrieb erforderlichen CPU-Nummern.

In einer weiteren Ausgestaltung umfasst die Speicherdirektzugriffssteuereinrichtung vierte Konfigurationsinformationen, wobei die vierten Konfigurationsinformationen eine jeweilige Quelle und/oder ein jeweiliges Ziel für die Übertragung der Informationsblöcke charakterisieren. Dadurch können die Informationsblöcke beispielsweise in einen zugehörigen Pufferspeicher ("dedizierter Buffer") oder in einen Ring-Pufferspeicher ("Ring Buffer") in dem Arbeitsspeicher ("System-RAM") bzw. in eine jeweilige der Recheneinheit zugeordnete Arbeitsspeicher-Einheit ("lokaler CPU-RAM") übertragen werden. Mittels Konfiguration kann dabei eine jeweils erforderliche Übertragungsart bzw. ein jeweiliges Übertragungsziel vorteilhaft vorgegeben werden. Dies kann insbesondere den Rx-Betrieb betreffen.

In einer Ausgestaltung ist die Speicherdirektzugriffssteuereinrichtung, insbesondere nur, zur Durchführung des Tx-Betriebs ausgebildet. In einer weiteren Ausgestaltung ist die Speicherdirektzugriffssteuereinrichtung, insbesondere nur, zur Durchführung des Rx-Betriebs ausgebildet.

In einer weiteren Ausgestaltung ist eine Speicherdirektzugriffssteuereinrichtung für eine einen Arbeitsspeicher aufweisende Recheneinheit vorgeschlagen, wobei die Speicherdirektzugriffssteuereinrichtung einen Anschluss zur Verbindung der Speicherdirektzugriffssteuereinrichtung mit einem die Recheneinheit mit dem Arbeitsspeicher verbindenden Bussystem aufweist, dadurch gekennzeichnet, dass die Speicherdirektzugriffssteuereinrichtung zur Ausführung der folgenden Schritte ausgebildet ist: - Einlesen von Steuerinformationen von wenigstens zwei von dem Kommunikationsmodul bereit gestellten Informationsblöcken, welche von dem Kommunikationsmodul zur Übertragung an den mit dem Bussystem verbundenen Arbeitsspeicher vorgesehen sind, wobei diese Steuerinformationen eine Priorität des jeweiligen Informationsblocks für die Übertragung an den Arbeitsspeicher charakterisieren, - Ermitteln einer Reihenfolge für die Übertragung der Informationsblöcke zu dem Arbeitsspeicher in Abhängigkeit der jeweiligen Priorität, - Übertragen der Informationsblöcke von dem Kommunikationsmodul zu dem Arbeitsspeicher gemäß der ermittelten Reihenfolge unter Verwendung eines Speicherdirektzugriffs von dem Kommunikationsmodul zu dem Arbeitsspeicher. Diese Ausgestaltung definiert somit eine Datenübertragung in Rx-Richtung (also von dem Kommunikationsmodul zu dem Arbeitsspeicher), insbesondere unabhängig von einer Datenübertragung in Tx-Richtung, die bei weiteren Varianten dieser Ausgestaltung optional ebenfalls denkbar ist.

Weiterhin betrifft die Erfindung ein Verfahren zum Betreiben einer Speicherdirektzugriffssteuereinrichtung für eine einen Arbeitsspeicher aufweisende Recheneinheit, wobei die Speicherdirektzugriffssteuereinrichtung einen Anschluss zur Verbindung der Speicherdirektzugriffssteuereinrichtung mit einem die Recheneinheit mit dem Arbeitsspeicher verbindenden Bussystem aufweist. Dabei umfasst das Verfahren die folgenden Schritte:

- Einlesen von Steuerinformationen von wenigstens zwei in dem Arbeitsspeicher gespeicherten Informationsblöcken, welche von der Recheneinheit zur Übertragung an ein mit dem Bussystem verbundenes Kommunikationsmodul vorgesehen sind, wobei die Steuerinformationen eine Priorität des jeweiligen Informationsblocks für die Übertragung an das Kommunikationsmodul charakterisieren,
- Ermitteln einer Reihenfolge für die Übertragung der Informationsblöcke zu dem Kommunikationsmodul in Abhängigkeit der jeweiligen Priorität,
- Übertragen der Informationsblöcke von dem Arbeitsspeicher zu dem Kommunikationsmodul gemäß der ermittelten Reihenfolge unter Verwendung eines Speicherdirektzugriffs von dem Arbeitsspeicher zu dem Kommunikationsmodul.

Es ergeben sich vergleichbare Vorteile, wie weiter oben für die Speicherdirektzugriffssteuereinrichtung für den Tx-Betrieb beschrieben.

In einer Ausgestaltung umfasst das Verfahren mindestens einen der folgenden weiteren Schritte:

- Empfangen eines Signals, insbesondere eines Triggersignals, und/oder eines ACK-Bits, englisch "acknowledge", und/oder eines Interrupts, von der Recheneinheit,
- Einlesen der Steuerinformationen in Abhängigkeit von dem empfangenen Signal,
- Auswerten von eine Prioritätsauswertung steuernden ersten Konfigurationsinformationen,
- Ermitteln einer ersten Priorität und/oder einer zweiten Priorität aus den Steuerinformationen,
- Ermitteln der Reihenfolge für die Übertragung der Informationsblöcke zu dem Kommunikationsmodul in Abhängigkeit von den ersten Konfigurationsinformationen und von den jeweiligen ersten und/oder jeweiligen zweiten Prioritäten, wobei die Reihenfolge optional in Abhängigkeit von den jeweiligen ersten Prioritäten oder von den jeweiligen zweiten Prioritäten oder von den jeweiligen ersten und jeweiligen zweiten Prioritäten ermittelt wird, insbesondere Ermitteln der Reihenfolge für die Übertragung der Informationsblöcke zu dem Kommunikationsmodul in Abhängigkeit der jeweiligen ersten Priorität, wenn die jeweiligen ersten Prioritäten verschieden sind, oder in Abhängigkeit der jeweiligen zweiten Priorität, wenn die jeweiligen ersten Prioritäten gleich sind,

- Übermitteln einer Übertragungs-Anfrage ("Request") von der Speicherdirektzugriffssteuereinrichtung an das Kommunikationsmodul,
- Senden eines Quittungssignals an die Recheneinheit und/oder Setzen bzw. Rücksetzen eines Flags in einem Informationsblock für eine erfolgreiche Übertragung des Informationsblocks von dem Arbeitsspeicher zu dem Kommunikationsmodul.

Es ergeben sich vergleichbare Vorteile, wie weiter oben für die weiteren Schritte der Speicherdirektzugriffssteuereinrichtung für den Tx-Betrieb beschrieben.

In einer weiteren Ausgestaltung umfasst das Verfahren die folgenden Schritte:

- Einlesen von Steuerinformationen von wenigstens zwei von dem Kommunikationsmodul bereit gestellten Informationsblöcken, welche von dem Kommunikationsmodul zur Übertragung an den mit dem Bussystem verbundenen Arbeitsspeicher vorgesehen sind, wobei diese Steuerinformationen eine Priorität des jeweiligen Informationsblocks für die Übertragung an den Arbeitsspeicher charakterisieren,
- Ermitteln einer Reihenfolge für die Übertragung der Informationsblöcke zu dem Arbeitsspeicher in Abhängigkeit der jeweiligen Priorität,
- Übertragen der Informationsblöcke von dem Kommunikationsmodul zu dem Arbeitsspeicher gemäß der ermittelten Reihenfolge unter Verwendung eines Speicherdirektzugriffs von dem Kommunikationsmodul zu dem Arbeitsspeicher.

Es ergeben sich vergleichbare Vorteile wie weiter oben für die Speicherdirektzugriffssteuereinrichtung für den Rx-Betrieb beschrieben.

In einer weiteren Ausgestaltung umfasst das Verfahren mindestens einen der folgenden weiteren Schritte:

- Empfangen eines Signals, insbesondere eines Triggersignals, von dem Kommunikationsmodul, wodurch die Speicherdirektzugriffssteuereinrichtung veranlasst werden kann, das Einlesen der Steuerinformationen nachfolgend durchzuführen,
- Einlesen der Steuerinformationen, insbesondere von den wenigstens zwei von dem Kommunikationsmodul bereit gestellten Informationsblöcken in Abhängigkeit von dem empfangenen Signal,
- Auswerten von eine Prioritätsauswertung steuernden ersten Konfigurationsinformationen,
- Ermitteln einer ersten Priorität und/oder einer zweiten Priorität aus den Steuerinformationen,
- Ermitteln der Reihenfolge für die Übertragung der Informationsblöcke zu dem Arbeitsspeicher in Abhängigkeit von den ersten Konfigurationsinformationen und von den jeweiligen ersten und/oder jeweiligen zweiten Prioritäten, wobei die Reihenfolge optional in Abhängigkeit von den jeweiligen ersten Prioritäten oder von den jeweiligen zweiten Prioritäten oder von den jeweiligen ersten und jeweiligen zweiten Prioritäten ermittelt wird, insbesondere Ermitteln der Reihenfolge für die Übertragung der Informationsblöcke zu dem Arbeitsspeicher in Abhängigkeit der jeweiligen ersten Priorität, wenn die jeweiligen ersten Prioritäten verschieden sind, oder in Abhängigkeit der jeweiligen zweiten Priorität, wenn die jeweiligen ersten Prioritäten gleich sind,
- Setzen eines Flags, insbesondere eines New-Flags, in einem zu übertragenden Informationsblock, und/oder Senden eines Interrupts an die Recheneinheit, wobei das New-Flag bzw. der Interrupt dazu vorgesehen ist, der Recheneinheit eine erfolgte Übertragung des Informationsblocks an den Arbeitsspeicher mitzuteilen,
- Ermitteln eines Ziel-Adressbereichs in dem Arbeitsspeicher und/oder Ermitteln einer lokalen Arbeitsspeicher-Einheit des Arbeitsspeichers,
- Senden eines Quittungssignals an das und/oder Setzen eines Flags in dem Kommunikationsmodul für eine erfolgreiche Übertragung eines Informationsblocks von dem Kommunikationsmodul zu dem Arbeitsspeicher.

Es ergeben sich vergleichbare Vorteile, wie weiter oben für die weiteren Schritte der Speicherdirektzugriffssteuereinrichtung für den Rx-Betrieb beschrieben.

In einer weiteren Ausgestaltung umfasst das Verfahren die folgenden Schritte:

- Einlesen von Steuerinformationen von wenigstens einem in dem Arbeitsspeicher gespeicherten ersten Informationsblock, welcher von der Recheneinheit zur Übertragung an das mit dem Bussystem verbundene Kommunikationsmodul vorgesehen ist, wobei die Steuerinformationen eine Priorität des wenigstens einen ersten Informationsblocks für die Übertragung an das Kommunikationsmodul charakterisieren,
- Einlesen von Steuerinformationen von wenigstens einem von dem Kommunikationsmodul bereit gestellten zweiten Informationsblock, welcher von dem Kommunikationsmodul zur Übertragung an den mit dem Bussystem verbundenen Arbeitsspeicher vorgesehen ist, wobei diese Steuerinformationen eine Priorität des wenigstens einen zweiten Informationsblocks für die Übertragung an den Arbeitsspeicher charakterisieren,

- Ermitteln einer Reihenfolge für die Übertragung des wenigstens einen ersten Informationsblocks und des wenigstens einen zweiten Informationsblocks in Abhängigkeit der jeweiligen Priorität des wenigstens einen ersten und wenigstens einen zweiten Informationsblocks,
- Übertragen des wenigstens einen ersten Informationsblocks von dem Arbeitsspeicher zu dem Kommunikationsmodul und/oder Übertragen des wenigstens einen zweiten Informationsblocks von dem Kommunikationsmodul zu dem Arbeitsspeicher gemäß der ermittelten Reihenfolge unter Verwendung eines Speicherdirektzugriffs.

Es ergeben sich vergleichbare Vorteile, wie weiter oben für die Speicherdirektzugriffssteuereinrichtung für den gemischten Tx-Betrieb und Rx-Betrieb beschrieben. Dabei versteht es sich, dass auch für den gemischten Tx-Betrieb und Rx-Betrieb die oben jeweils getrennt für den Tx-Betrieb und den Rx-Betrieb beschriebenen "weiteren" Schritte, soweit anwendbar, vorteilhaft für das Verfahren ergänzt werden können.

Bei einer weiteren besonders bevorzugten Ausführungsform ist es möglich, mittels der Speicherdirektzugriffssteuereinrichtung eine Gateway-Funktionalität darzustellen. Nach dem Empfangen einer Nachricht in einem Kommunikationsmodul werden die entsprechenden Daten durch die Speicherdirektzugriffssteuereinrichtung z.B. zum Speicher der Recheneinheit übertragen und stehen dort für die Recheneinheit zur Verfügung. Die gleichen Daten können vorteilhaft auch weiter für eine Aussendung an andere Kommunikationsmodule verwendet werden. D.h., die in einem ersten Schritt durch die Speicherdirektzugriffssteuereinrichtung zunächst zum Speicher der Recheneinheit übertragenen Daten (Rx Richtung) können in einem zweiten Schritt von der Speicherdirektzugriffssteuereinrichtung an dasselbe und/oder andere Kommunikationsmodule, insbesondere MCAN Module, zum Versenden an andere Teilnehmer übertragen werden (Tx Richtung). Dabei ist vorstellbar, die Rx Daten von verschiedenen CAN Knoten einzusammeln und nur bestimmte Nachrichten zum weiter Verschicken zu markieren. Weiterhin besteht einer Ausführungsform zufolge vorteilhaft die Möglichkeit, die Nachrichten in bestimmen Zeitabständen herauszusenden. Ein besonderer Vorteil dieser Ausführungsform ist, dass die Gateway-Funktionalität ohne eine steuernde Recheneinheit bzw. CPU abläuft und dadurch keine zusätzliche Performance benötigt.

Nachfolgend werden beispielhafte Ausführungsformen der Erfindung unter Bezugnahme auf die Zeichnung erläutert. In der Zeichnung zeigen:

Figur 1 ein stark vereinfachtes Blockschaltbild für ein Rechnersystem mit einem Bus;

Figur 2 eine erste Ausführungsform eines Rechnersystems mit einer Mehrzahl von Recheneinheiten und den Recheneinheiten jeweils zugeordneten Arbeitsspeicher-Einheiten;

Figur 3 eine zweite Ausführungsform des Rechnersystems mit einer Mehrzahl von Recheneinheiten und einem den Recheneinheiten gemeinsamen Arbeitsspeicher;

Figur 4 ein Flussdiagramm für eine erste Ausführungsform eines Verfahrens zum Betreiben des Rechnersystems nach Figur 2 oder 3 zur Durchführung eines Speicherdirektzugriffs;

Figur 5 ein Flussdiagramm für eine zweite Ausführungsform des Verfahrens zur Durchführung des Speicherdirektzugriffs; und

Figur 6 ein Flussdiagramm für eine dritte Ausführungsform des Verfahrens zur Durchführung des Speicherdirektzugriffs.

Es werden für funktionsäquivalente Elemente und Größen in allen Figuren auch bei unterschiedlichen Ausführungsformen die gleichen Bezugszeichen verwendet.

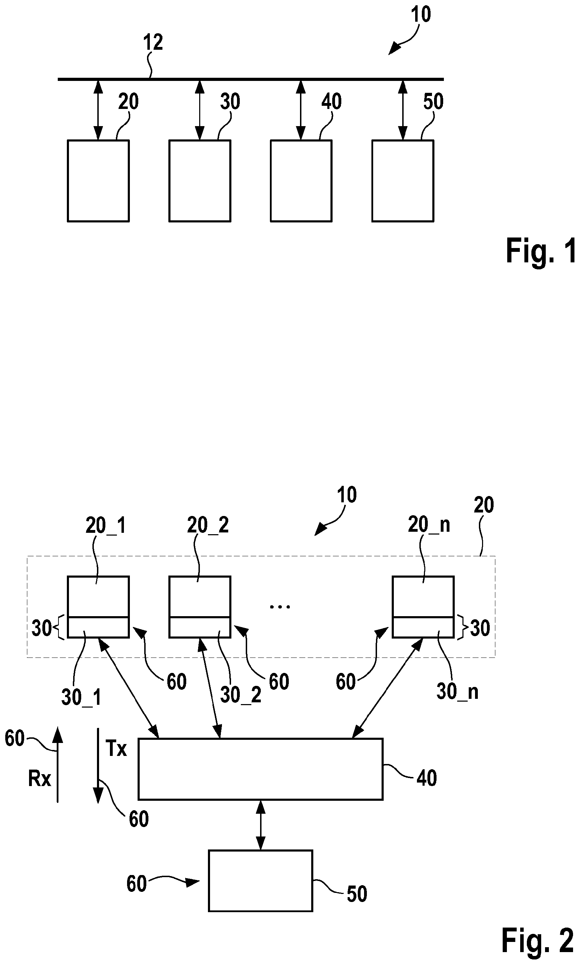

Die Figur 1 zeigt ein stark vereinfachtes Blockschaltbild für ein Rechnersystem 10 mit einer Recheneinheit 20, einem Arbeitsspeicher 30 und einer Speicherdirektzugriffssteuereinrichtung 40, welche jeweils mit einem die Recheneinheit 20 mit dem Arbeitsspeicher 30 verbindenden Bussystem 12 verbunden sind. Weiterhin zeigt die Figur 1 ein mit dem Bussystem 12 verbundenes Kommunikationsmodul 50.

Die Figur 2 zeigt ein Rechnersystem 10, welches vorliegend eine Recheneinheit 20 mit einer Mehrzahl von Prozessorkernen und den Prozessorkernen jeweils zugeordneten Arbeitsspeicher-Einheiten 30_1, 30_2 bis 30_n umfasst. Die Arbeitsspeicher-Einheiten 30_1, 30_2 bis 30_n bilden zusammen einen Arbeitsspeicher 30 des Rechnersystems 10. Die besagten Prozessorkerne werden vorliegend als Recheneinheiten 20_1, 20_2 bis 20_n bezeichnet.

Weiterhin umfasst das Rechnersystem 10 die Speicherdirektzugriffssteuereinrichtung 40 und das Kommunikationsmodul 50.

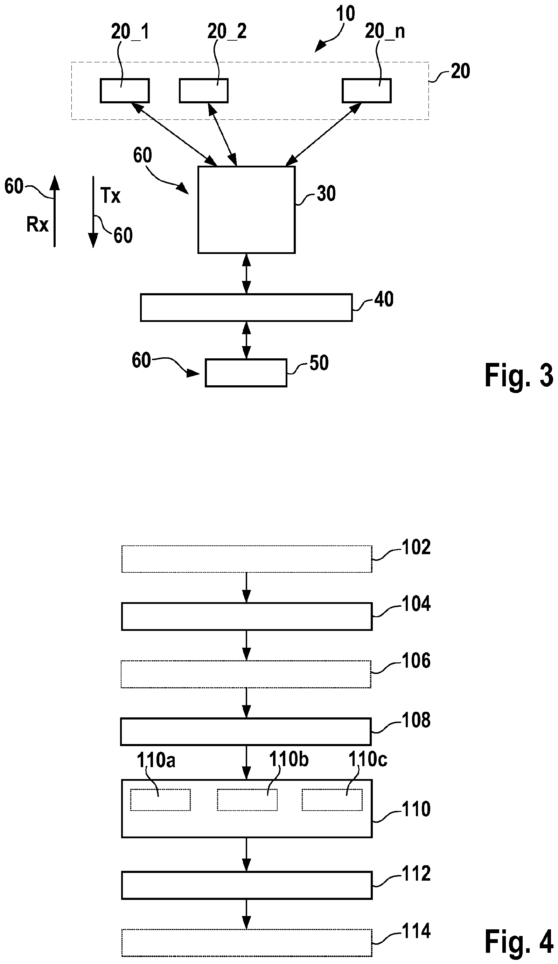

In einer Ausführungsform ist das Kommunikationsmodul 50 zum Betrieb mit einer Recheneinheit 20 ausgebildet, welche lediglich einen Prozessorkern umfasst. In einer weiteren Ausführungsform ist das Kommunikationsmodul 50 zum Betrieb mit mehreren Prozessorkernen ausgebildet. Beide Ausführungsformen des Kommunikationsmoduls 50 können in dem Rechnersystem 10 der Figuren 2 oder 3 alternativ verwendet werden.

Der Arbeitsspeicher 30 bzw. die Arbeitsspeicher-Einheiten 30_1, 30_2 bis 30_n können beispielsweise ein "externes" RAM, Speicher mit wahlfreiem Zugriff, englisch "random access memory", oder ein der Recheneinheit 20 bzw. den Recheneinheiten 20_1, 20_2, 20_n zugehöriges "internes" RAM sein.

Die Recheneinheit 20, die Arbeitsspeicher-Einheiten 30_1 bis 30_n, die Speicherdirektzugriffssteuereinrichtung 40 und das Kommunikationsmodul 50 sind über das gemeinsame Bussystem 12 (siehe Figur 1) miteinander verbunden, über welches Informationsblöcke 60 ausgetauscht werden können. Die Informationsblöcke 60 können "Nutzdaten" und/oder Steuerinformationen umfassen. Vorliegend werden nur solche Informationsblöcke 60 betrachtet, welche zwischen dem Arbeitsspeicher 30 und dem Kommunikationsmodul 50 ausgetauscht werden bzw. ausgetauscht werden sollen.

Das Bussystem kann beispielsweise als paralleles Bussystem mit einem eine erste Anzahl von Adressleitungen aufweisenden Adressbus und eine zweite Anzahl von Datenleitungen aufweisenden Datenbus ausgebildet sein.

Die in der Figur 2 gezeichneten Doppelpfeile zwischen den Arbeitsspeicher-Einheiten 30_1, 30_2 bis 30_n und der Speicherdirektzugriffssteuereinrichtung 40, sowie zwischen der Speicherdirektzugriffssteuereinrichtung 40 und dem Kommunikationsmodul 50, charakterisieren vorliegend eine jeweilige funktionale Zuordnung und nur bedingt eine jeweilige physikalische Verbindung.

Weiterhin sind links in der Figur 2 Pfeile gezeichnet, welche eine Übertragungsrichtung für die Informationsblöcke 60 in Bezug auf einen "Tx-Betrieb" bzw. "Rx-Betrieb" charakterisieren, wie es weiter unten noch näher erläutert werden wird.

Das Kommunikationsmodul 50 ist dazu ausgebildet, eine mögliche Mehrzahl von Informationsblöcken 60 zu senden bzw. zu empfangen, wobei die Informationsblöcke 60 jeweils durch eine spezifische Priorität charakterisiert sind, wie weiter unten noch näher erläutert werden wird. Vorzugsweise ist das Kommunikationsmodul 50 mit einer Mehrzahl von (nicht dargestellten) Datenquellen und/oder Datensenken verbunden, welche beispielsweise über diskrete Leitungen oder über einen oder mehrere Busse (nicht dargestellt) mit dem Kommunikationsmodul 50 kommunizieren können.

Vorliegend umfasst das Kommunikationsmodul 50 ein so genanntes "MCAN-Modul", welches mit einem nicht dargestellten CAN-Bus kommunizieren kann, an welchem eine Mehrzahl von vorliegend als "logische Einheiten" bezeichnete CAN-Bus-Teilnehmer angeschlossen sind. Die Abkürzung "CAN" bedeutet "Controller Area Network". Der Buchstabe "M" charakterisiert einen herstellerspezifischen Namenszusatz.

Beispielsweise umfasst das MCAN-Modul bzw. das Kommunikationsmodul 50 unter anderem folgende Teilschaltungen:

- eine Schnittstellen-Verwaltung (engl. "interface management logic") für das Bussystem 12,
- einen Sendepuffer (engl. "transmit buffer"),
- einen oder mehrere Empfangspuffer (engl. "receive buffer"),
- einen Daten-Prozessor (engl. "bit stream processor"),
- eine Fehlerbehandlungseinrichtung (engl. "error management logic"),
- eine Übertragungs-Logik (engl. "transceive logic"),
- eine Zeitsteuerung (engl. "bit timing logic"), und/oder
- eine Schnittstellen-Logik (engl. "line interface logic") für einen angeschlossenes CAN-Bussystem.

Unter anderem zeigt die Figur 2 also eine Speicherdirektzugriffssteuereinrichtung 40 für eine den Arbeitsspeicher 30 aufweisende Recheneinheit 20, wobei die Speicherdirektzugriffssteuereinrichtung 40 einen Anschluss zur Verbindung der Speicherdirektzugriffssteuereinrichtung 40 mit dem die Recheneinheit 20 mit dem Arbeitsspeicher 30 verbindenden Bussystem 12 aufweist. Die Speicherdirektzugriffssteuereinrichtung 40 ist zur Ausführung mehrerer Verfahrensschritte ausgebildet, welche weiter unten bei den Figuren 4 bis 6 noch näher erläutert werden.

In einer Ausführungsform ist die Recheneinheit 20 und/oder der Arbeitsspeicher 30 und/oder die Speicherdirektzugriffssteuereinrichtung 40 und/oder ein jeweiliger Informationsblock 60 unter anderem durch folgende im Wesentlichen selbsterklärende Größen, Steuerinformationen, und/oder Konfigurationsinformationen charakterisiert:
Für eine so genannte "Tx-Konfiguration": CAN_ID (1...n) Data ACK. Für eine so genannte "Rx-Konfiguration": CAN_ID (1...n) Data NEW.

In einer Ausführungsform ist die Recheneinheit 20 und/oder der Arbeitsspeicher 30 und/oder die Speicherdirektzugriffssteuereinrichtung 40 und/oder ein jeweiliger Informationsblock 60 unter anderem durch folgende im Wesentlichen selbsterklärende Größen, Steuerinformationen, und/oder Konfigurationsinformationen charakterisiert:

Für die "Tx-Konfiguration":

SrcAddr Len TargetAddr Prio ID(l...n) ACK Intern_TransSuccess.

Für die "Rx-Konfiguration":
SrcAddr Len TargetAddr ID(l...n) CPUx NEW Intr.

Hierbei bedeutet:

**SrcAddr** - Quelladresse als Konfiguration
**Len** - Length als Konfiguration - wie viele Bytes übertragen werden müssen,
**TargetAddr** - Zieladresse als Konfiguration,
**ID(1...n)-** ID einer Rx Nachricht als Konfiguration - notwendig für Entscheidung, ob danach ein Interrupt an die CPU ausgelöst werden soll,
**CPUx** - Nachdem die Nachricht empfangen wurde, wird an die CPUx der Interrupt ausgelöst - Konfiguration Bit,
**NEW** - bedeutet, die neue Daten wurden empfangen - wird von DMA gesetzt und CPU zurück gesetzt,
**Intr** - Interrupt - Konfiguration Bit, bedeutet Interrupt auslösen, nachdem die Nachricht empfangen wurde.

In einer Ausführungsform wird eine jeweilige Priorität mittels eines Vergleichs von Bitwerten ermittelt, wobei die Bitwerte durch einen Abschnitt der jeweiligen Steuerinformationen charakterisiert sind. Die nachfolgend dargestellten drei Bitfolgen zeigen ein Beispiel. Dabei werden die jeweiligen Bitfolgen bitweise von links nach rechts verglichen, wobei eine jeweilige "0" dominant gegen eine jeweilige "1" ist.

$$0/0/0/1/0/0/1/ \ ... \ 0/0/1 \quad \text{Bitfolge 1}$$

$$0/0/0/0/0/1/0/ \ ... \ 0/0/0 \quad \text{Bitfolge 2}$$

$$0/0/0/0/0/0/1/ \ ... \ 0/0/0 \quad \text{Bitfolge 3}$$

Gemäß diesem Beispiel würde der der Bitfolge 3 zugehörige Informationsblock zuerst übertragen, danach der der Bitfolge 2 zugehörige Informationsblock, und danach der der Bitfolge 1 zugehörige Informationsblock.
Die Figur 3 zeigt ähnlich zu der Figur 2 eine weitere Ausführungsform des Rechnersystems 10. Im Unterschied zu der Figur 2 zeigt die Figur 3 einen für alle Recheneinheiten 20_1, 20_2 bis 20_n gemeinsamen Arbeitsspeicher 30, welcher beispielsweise mittels einer oder mehrerer integrierter Schaltungen oder mittels eines oder mehrerer so genannte "RAM-Speichermodule" ausgeführt ist.
Die Figur 4 zeigt ein Flussdiagramm für eine erste Ausführungsform eines Verfahrens zum Betreiben der Speicherdirektzugriffssteuereinrichtung 40, wobei Informationsblöcke 60 von dem Arbeitsspeicher 30 hin zu dem Kommunikationsmodul 50 übertragen werden bzw. werden sollen. Dies entspricht dem weiter oben bei den Figuren 2 und 3 bezeichneten "Tx-Betrieb" und kann beispielsweise mittels der folgenden Schritte durchgeführt werden:

- Empfangen 102 eines Signals, insbesondere eines Triggersignals, und/oder eines ACK-Bits, englisch "acknowledge", und/oder eines Interrupts, von der Recheneinheit 20, und nach dem Empfangen des Signals:
- Einlesen 104 von Steuerinformationen von wenigstens zwei in dem Arbeitsspeicher 30 gespeicherten Informationsblöcken 60, welche von der Recheneinheit 20 zur Übertragung an das mit dem Bussystem 12 verbundene Kommunikationsmodul 50 vorgesehen sind, wobei die Steuerinformationen eine Priorität des jeweiligen Informationsblocks 60 für die Übertragung an das Kommunikationsmodul 50 charakterisieren.

Dabei erfolgt das Einlesen der Steuerinformationen in Abhängigkeit von dem empfangenen Signal, beispielsweise kann das Einlesen der Steuerinformationen durch das Empfangen 102 des Signals ausgelöst werden.

- Auswerten 106 von eine Prioritätsauswertung steuernden ersten Konfigurationsinformationen,

- Ermitteln 108 einer ersten Priorität und/oder einer zweiten Priorität aus den Steuerinformationen,

- Ermitteln 110 einer Reihenfolge für die Übertragung der Informationsblöcke 60 zu dem Kommunikationsmodul 50

in Abhängigkeit der jeweiligen Priorität.

In einer Ausführungsform erfolgt dabei ein Ermitteln 110 der Reihenfolge für die Übertragung der Informationsblöcke 60 zu dem Kommunikationsmodul 50 in Abhängigkeit von den ersten Konfigurationsinformationen und von den jeweiligen ersten und/oder jeweiligen zweiten Prioritäten, wobei die Reihenfolge optional in Abhängigkeit von den jeweiligen ersten Prioritäten (Block 110a) oder von den jeweiligen zweiten Prioritäten (Block 110b) oder von den jeweiligen ersten und jeweiligen zweiten Prioritäten (Block 110c) ermittelt wird.

In einer Ausführungsform erfolgt dabei ein Ermitteln 110 der Reihenfolge für die Übertragung der Informationsblöcke 60 zu dem Kommunikationsmodul 50 in Abhängigkeit der jeweiligen ersten Priorität, wenn die jeweiligen ersten Prioritäten verschieden sind, oder in Abhängigkeit der jeweiligen zweiten Priorität, wenn die jeweiligen ersten Prioritäten gleich sind.

- Übermitteln einer Übertragungs-Anfrage ("Request") von der Speicherdirektzugriffssteuereinrichtung 10 an das Kommunikationsmodul 50,

- Übertragen 112 der Informationsblöcke 60 von dem Arbeitsspeicher 30 zu dem Kommunikationsmodul 50 gemäß der ermittelten Reihenfolge unter Verwendung eines Speicherdirektzugriffs von dem Arbeitsspeicher 30 zu dem Kommunikationsmodul 50,

- Senden 114 eines Quittungssignals an die Recheneinheit 20 und/oder Setzen bzw. Rücksetzen eines Flags in einem Informationsblock 60 für eine erfolgreiche Übertragung des Informationsblocks 60 von dem Arbeitsspeicher 30 zu dem Kommunikationsmodul 50.

In einer Ausführungsform ist das im Block 102 in der Speicherdirektzugriffssteuereinrichtung 10 empfangene ACK-Bit mit dem im Block 114 gesendeten ACK-Bit des Quittungssignals vergleichbar.

Sofern es logisch möglich und sinnvoll ist, können die in Figur 4 beschriebenen Verfahrensschritte gegebenenfalls in einer anderen Reihenfolge abgearbeitet werden.

In einer Ausführungsform erfolgt das in der Figur 4 beschriebene Verfahren zumindest teilweise ohne die optionalen, durch die Bezugszeichen 102, 106, 110a, 110b, 110c und 114 bezeichneten, Schritte, welche in der Figur 4 daher gestrichelt gezeichnet sind.

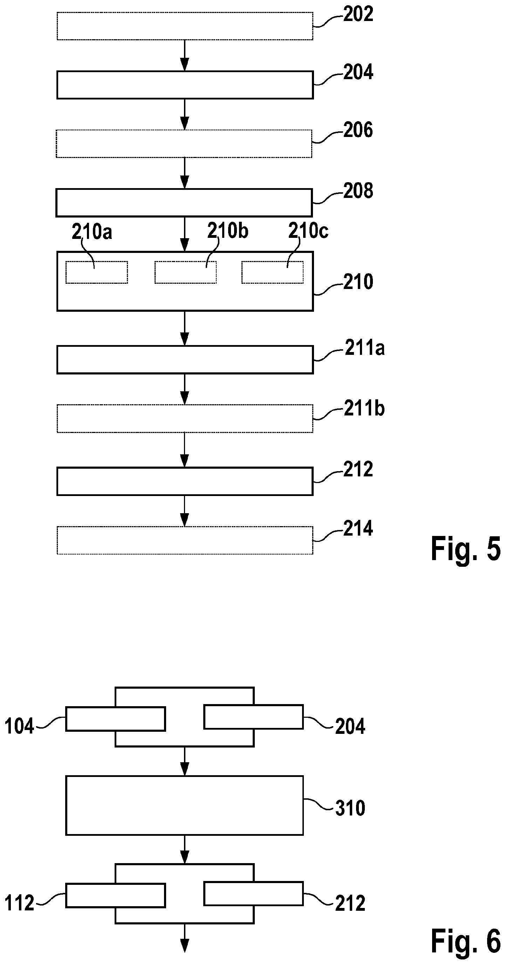

Die Figur 5 zeigt ein Flussdiagramm für eine zweite Ausführungsform eines Verfahrens zum Betreiben der Speicherdirektzugriffssteuereinrichtung 40, wobei Informationsblöcke 60 von dem Kommunikationsmodul 50 hin zu dem Arbeitsspeicher 30 übertragen werden bzw. werden sollen. Dies entspricht dem weiter oben bei den Figuren 2 und 3 bezeichneten "Rx-Betrieb" und kann beispielsweise mittels der folgenden Schritte durchgeführt werden:

- Empfangen 202 eines Signals, insbesondere eines Triggersignals, von dem Kommunikationsmodul 50, wodurch angezeigt wird, dass in dem Kommunikationsmodul 50 mindestens ein Informationsblock 60 zum Übertragen an den Arbeitsspeicher 30 bzw. an eine oder mehrere der Arbeitsspeicher-Einheiten 30_1 bis 30_n bereit gehalten wird, und wodurch die Speicherdirektzugriffssteuereinrichtung 10 veranlasst wird, das Einlesen der Steuerinformationen nachfolgend durchzuführen. Nach dem Empfangen des Signals:

- Einlesen 204 von Steuerinformationen von wenigstens zwei von dem Kommunikationsmodul 50 bereit gestellten Informationsblöcken 60, welche von dem Kommunikationsmodul 50 zur Übertragung an den mit dem Bussystem 12 verbundenen Arbeitsspeicher 30 vorgesehen sind, wobei diese Steuerinformationen eine Priorität des jeweiligen Informationsblocks 60 für die Übertragung an den Arbeitsspeicher 30 charakterisieren,

- Auswerten 206 von eine Prioritätsauswertung steuernden "ersten" Konfigurationsinformationen. Beispielsweise umfassen die ersten Konfigurationsinformationen Optionen für das Ermitteln der Reihenfolge, siehe weiter unten die Schritte (1) und (2).

In einer Ausführungsform umfasst die Speicherdirektzugriffssteuereinrichtung 40 "zweite" Konfigurationsinformationen, wobei die zweiten Konfigurationsinformationen jeweilige mit dem Kommunikationsmodul 50 kommunizierende logische Einheiten und/oder von den jeweiligen logischen Einheiten zu sendende und/oder zu empfangene Steuerinformationen charakterisieren. Beispielsweise umfassen die zweiten Konfigurationsinformationen alle für den Rx-Betrieb erforderlichen CAN-IDs.

In einer Ausführungsform umfasst die Speicherdirektzugriffssteuereinrichtung 40 "dritte" Konfigurationsinformationen, wobei die dritten Konfigurationsinformationen die Recheneinheit 20, 20_1 bis 20_n ("CPU-Nummer") und/oder den Arbeitsspeicher 30, 30_1 bis 30_n charakterisierende Größen umfassen.

- Ermitteln 208 einer ersten Priorität und/oder einer zweiten Priorität aus den Steuerinformationen.
- Ermitteln 210 einer Reihenfolge für die Übertragung der Informationsblöcke 60 zu dem Arbeitsspeicher 30 in Abhängigkeit der jeweiligen Priorität.

Weiterhin wird ermittelt, an welche Recheneinheiten 20_1 bis 20_n bzw. an welche zugehörige Arbeitsspeicher-Einheit 30_1 bis 30_n ein jeweiliger Informationsblock 60 übertragen werden soll, also:
In einer Ausführungsform umfasst die Speicherdirektzugriffssteuereinrichtung 40 vierte Konfigurationsinformationen, wobei die vierten Konfigurationsinformationen eine jeweilige Quelle und/oder ein jeweiliges Ziel für die Übertragung der Informationsblöcke 60 charakterisieren, siehe den folgenden Block 211a.

- Ermitteln 211a eines Ziel-Adressbereichs in dem Arbeitsspeicher 30 (siehe Figur 3) und/oder Ermitteln einer lokalen Arbeitsspeicher-Einheit 30_1 bis 30_n (siehe Figur 2) des Arbeitsspeichers 30.

- Setzen 211b eines Flags, insbesondere eines New-Flags, in dem zu übertragenden Informationsblock 60, und/oder Senden eines Interrupts an die Recheneinheit 20 bzw. an die jeweilige Recheneinheit 20_1 bis 20_n, wobei das New-Flag bzw. der Interrupt dazu vorgesehen ist, der Recheneinheit 20 (bzw. 20_1 bis 20_n) eine erfolgte Übertragung des Informationsblocks 60 an den Arbeitsspeicher 30 (bzw. 30_1 bis 30_n) mitzuteilen.

- Übertragen 212 der Informationsblöcke 60 von dem Kommunikationsmodul 50 zu dem Arbeitsspeicher 30 gemäß der ermittelten Reihenfolge unter Verwendung eines Speicherdirektzugriffs von dem Kommunikationsmodul 50 zu dem Arbeitsspeicher 30.

- Senden 214 eines Quittungssignals an das und/oder Setzen eines Flags in dem Kommunikationsmodul 50 für eine erfolgreiche Übertragung eines Informationsblocks 60 von dem Kommunikationsmodul 50 zu dem Arbeitsspeicher 30. Daraufhin kann in dem Kommunikationsmodul 50 ein für den Rx-Betrieb vorgesehener Speicherbereich zumindest teilweise wieder freigegeben werden.

Sofern es logisch möglich und sinnvoll ist, können die in Figur 5 beschriebenen Verfahrensschritte gegebenenfalls in einer anderen Reihenfolge abgearbeitet werden.

In einer Ausführungsform wird für das Verfahren nur die erste Priorität verwendet, welche vorliegend direkt aus der CAN-ID ermittelt wird. In einer Ausführungsform wird für das Verfahren nur die zweite Priorität verwendet.

In einer Ausführungsform werden für das Verfahren die erste und die zweite Priorität verwendet, wobei die folgenden Schritte (1) und/oder (2) durchgeführt werden:

(1) Ermitteln 210 der Reihenfolge für die Übertragung der Informationsblöcke 60 zu dem Arbeitsspeicher 30 in Abhängigkeit von den ersten Konfigurationsinformationen und von den jeweiligen ersten und/oder jeweiligen zweiten Prioritäten, wobei die Reihenfolge optional in Abhängigkeit von den jeweiligen ersten Prioritäten (Block 210a) oder von den jeweiligen zweiten Prioritäten (Block 210b) oder von den jeweiligen ersten und jeweiligen zweiten Prioritäten (Block 210c) ermittelt wird,

(2) Ermitteln der Reihenfolge für die Übertragung der Informationsblöcke 60 zu dem Arbeitsspeicher 30 in Abhängigkeit der jeweiligen ersten Priorität, wenn die jeweiligen ersten Prioritäten verschieden sind, oder in Abhängigkeit der jeweiligen zweiten Priorität, wenn die jeweiligen ersten Prioritäten gleich sind

In einer Ausführungsform erfolgt das in der Figur 5 beschriebene Verfahren zumindest teilweise ohne die durch die Bezugszeichen 202, 206, 210a, 210b, 210c, 211b und 214 bezeichneten Schritte, welche in der Figur 5 daher gestrichelt gezeichnet sind.

Die Figur 6 zeigt ein Flussdiagramm für eine dritte Ausführungsform eines Verfahrens zum Betreiben der Speicherdirektzugriffssteuereinrichtung 40, wobei Informationsblöcke 60 sowohl von dem Arbeitsspeicher 30 hin zu dem Kommunikationsmodul 50 als auch von dem Kommunikationsmodul 50 hin zu dem Arbeitsspeicher 30 übertragen werden bzw. werden sollen. Dies entspricht im Wesentlichen einer gemeinsamen Nutzung bzw. gemeinsamen Durchführung des weiter oben mittels der Figuren 4 und 5 beschriebenen "Tx-Betriebs" und "Rx-Betriebs" und kann beispielsweise mittels der folgenden Schritte durchgeführt werden:

- Einlesen 104 von Steuerinformationen von wenigstens einem in dem Arbeitsspeicher gespeicherten ersten Informationsblock 60, welcher von der Recheneinheit 20 zur Übertragung an das mit dem Bussystem 12 verbundene Kommunikationsmodul 50 vorgesehen ist, wobei die Steuerinformationen eine Priorität des wenigstens einen ersten Informationsblocks 60 für die Übertragung an das Kommunikationsmodul 50 charakterisieren,

- Einlesen 204 von Steuerinformationen von wenigstens einem von dem Kommunikationsmodul 50 bereit gestellten zweiten Informationsblock 60, welcher von dem Kommunikationsmodul 50 zur Übertragung an den mit dem Bussystem 12 verbundenen Arbeitsspeicher 30 vorgesehen ist, wobei diese Steuerinformationen eine Priorität des wenigstens einen zweiten Informationsblocks 60 für die Übertragung an den Arbeitsspeicher 30 charakterisieren,

- Ermitteln 310 einer Reihenfolge für die Übertragung des wenigstens einen ersten Informationsblocks 60 und des wenigstens einen zweiten Informationsblocks 60 in Abhängigkeit der jeweiligen Priorität des wenigstens einen ersten und wenigstens einen zweiten Informationsblocks 60,

- Übertragen 112 bzw. 212 des wenigstens einen ersten Informationsblocks 60 von dem Arbeitsspeicher 30 zu dem Kommunikationsmodul 50 und/oder Übertragen des wenigstens einen zweiten Informationsblocks 60 von dem Kommunikationsmodul 50 zu dem Arbeitsspeicher 30 gemäß der ermittelten Reihenfolge unter Verwendung eines Speicherdirektzugriffs.

Es versteht sich, dass die dritte Ausführungsform für das Verfahren gemäß Figur 6 insbesondere mittels der in den Figuren 4 und 5 zumeist gestrichelt gezeichneten Blöcke 102, 106, 110a, 110b, 110c, 114, 202, 206, 210a, 210b, 210c, 211a, 211b und 214 vorteilhaft ergänzt werden kann, sofern diese jeweils anwendbar sind. Dies ist wegen der besseren Übersicht hier nicht nochmals beschrieben.

## Patentansprüche

1. Speicherdirektzugriffssteuereinrichtung (40) für eine einen Arbeitsspeicher (30; 30_1 bis 30_n) aufweisende Recheneinheit (20; 20_1 bis 20_n), wobei die Speicherdirektzugriffssteuereinrichtung (40) einen Anschluss zur Verbindung der Speicherdirektzugriffssteuereinrichtung (40) mit einem die Recheneinheit (20; 20_1 bis 20_n) mit dem Arbeitsspeicher (30; 30_1 bis 30_n) verbindenden Bussystem (12) aufweist, **dadurch gekennzeichnet, dass** die Speicherdirektzugriffssteuereinrichtung (40) zur Ausführung der folgenden Schritte ausgebildet ist:

    - Einlesen (104) von Steuerinformationen von wenigstens zwei in dem Arbeitsspeicher (30; 30_1 bis 30_n) gespeicherten Informationsblöcken (60), welche von der Recheneinheit (20; 20_1 bis 20_n) zur Übertragung an ein mit dem Bussystem (12) verbundenes Kommunikationsmodul (50) vorgesehen sind, wobei die Steuerinformationen eine Priorität des jeweiligen Informationsblocks (60) für die Übertragung an das Kommunikationsmodul (50) charakterisieren,
    - Ermitteln (110) einer Reihenfolge für die Übertragung der Informationsblöcke (60) zu dem Kommunikationsmodul (50) in Abhängigkeit der jeweiligen Priorität,
    - Übertragen (112) der Informationsblöcke (60) von dem Arbeitsspeicher (30; 30_1 bis 30_n) zu dem Kommunikationsmodul (50) gemäß der ermittelten Reihenfolge unter Verwendung eines Speicherdirektzugriffs von dem Arbeitsspeicher (30; 30_1 bis 30_n) zu dem Kommunikationsmodul (50).

2. Speicherdirektzugriffssteuereinrichtung (40) nach Anspruch 1, wobei die Speicherdirektzugriffssteuereinrichtung (40) zur Ausführung mindestens eines der folgenden weiteren Schritte ausgebildet ist:

    - Empfangen (102) eines Signals, insbesondere eines Triggersignals, und/oder eines ACK-Bits, englisch "acknowledge", und/oder eines Interrupts, von der Recheneinheit (20; 20_1 bis 20_n),
    - Einlesen (104) der Steuerinformationen in Abhängigkeit von dem empfangenen Signal,
    - Auswerten (106) von eine Prioritätsauswertung steuernden ersten Konfigurationsinformationen,
    - Ermitteln (108) einer ersten Priorität und/oder einer zweiten Priorität aus den Steuerinformationen,
    - Ermitteln (110a, 110b, 110c) der Reihenfolge für die Übertragung der Informationsblöcke (60) zu dem Kommunikationsmodul (50) in Abhängigkeit von den ersten Konfigurationsinformationen und von den jeweiligen ersten und/oder jeweiligen zweiten Prioritäten, wobei die Reihenfolge optional in Abhängigkeit von den jeweiligen ersten Prioritäten oder von den jeweiligen zweiten Prioritäten oder von den jeweiligen ersten und jeweiligen zweiten Prioritäten ermittelt wird, insbesondere Ermitteln (110a, 110b, 110c) der Reihenfolge für die Übertragung der Informationsblöcke (60) zu dem Kommunikationsmodul (50) in Abhängigkeit der jeweiligen ersten Priorität, wenn die jeweiligen ersten Prioritäten verschieden sind, oder in Abhängigkeit der jeweiligen zweiten Priorität, wenn die jeweiligen ersten Prioritäten gleich sind,
    - Übermitteln einer Übertragungs-Anfrage von der Speicherdirektzugriffssteuereinrichtung (10) an das Kommunikationsmodul (50),
    - Senden (114) eines Quittungssignals an die Recheneinheit (20; 20_1 bis 20_n) und/oder Setzen bzw. Rücksetzen eines Flags in einem Informationsblock (60) für eine erfolgreiche Übertragung des Informationsblocks (60) von dem Arbeitsspeicher (30; 30_1 bis 30_n) zu dem Kommunikationsmodul (50).

3. Speicherdirektzugriffssteuereinrichtung (40) nach Anspruch 1 oder 2, wobei die Speicherdirektzugriffssteuereinrichtung (40) zur Ausführung der folgenden Schritte ausgebildet ist:

- Einlesen (204) von Steuerinformationen von wenigstens zwei von dem Kommunikationsmodul (50) bereit gestellten Informationsblöcken (60), welche von dem Kommunikationsmodul (50) zur Übertragung an den mit dem Bussystem (12) verbundenen Arbeitsspeicher (30; 30_1 bis 30_n) vorgesehen sind, wobei diese Steuerinformationen eine Priorität des jeweiligen Informationsblocks (60) für die Übertragung an den Arbeitsspeicher (30; 30_1 bis 30_n) charakterisieren,
- Ermitteln (210) einer Reihenfolge für die Übertragung der Informationsblöcke (60) zu dem Arbeitsspeicher (30; 30_1 bis 30_n) in Abhängigkeit der jeweiligen Priorität,
- Übertragen (212) der Informationsblöcke (60) von dem Kommunikationsmodul (50) zu dem Arbeitsspeicher (30; 30_1 bis 30_n) gemäß der ermittelten Reihenfolge unter Verwendung eines Speicherdirektzugriffs von dem Kommunikationsmodul (50) zu dem Arbeitsspeicher (30; 30_1 bis 30_n).

4. Speicherdirektzugriffssteuereinrichtung (40) nach Anspruch 3, wobei die Speicherdirektzugriffssteuereinrichtung (40) zur Ausführung mindestens eines der folgenden weiteren Schritte ausgebildet ist:

- Empfangen (202) eines Signals, insbesondere eines Triggersignals, von dem Kommunikationsmodul (50), wodurch insbesondere die Speicherdirektzugriffssteuereinrichtung (10) veranlasst werden kann, das Einlesen der Steuerinformationen nachfolgend durchzuführen,
- Einlesen (204) der Steuerinformationen, insbesondere von den wenigstens zwei von dem Kommunikationsmodul (50) bereit gestellten Informationsblöcken (60), in Abhängigkeit von dem empfangenen Signal,
- Auswerten (206) von eine Prioritätsauswertung steuernden ersten Konfigurationsinformationen,
- Ermitteln (208) einer ersten Priorität und/oder einer zweiten Priorität aus den Steuerinformationen,
- Ermitteln (210a, 210b, 210c) der Reihenfolge für die Übertragung der Informationsblöcke (60) zu dem Arbeitsspeicher (30; 30_1 bis 30_n) in Abhängigkeit von den ersten Konfigurationsinformationen und von den jeweiligen ersten und/oder jeweiligen zweiten Prioritäten, wobei die Reihenfolge optional in Abhängigkeit von den jeweiligen ersten Prioritäten oder von den jeweiligen zweiten Prioritäten oder von den jeweiligen ersten und jeweiligen zweiten Prioritäten ermittelt wird, insbesondere Ermitteln (210a, 210b, 210c) der Reihenfolge für die Übertragung der Informationsblöcke (60) zu dem Arbeitsspeicher (30; 30_1 bis 30_n) in Abhängigkeit der jeweiligen ersten Priorität, wenn die jeweiligen ersten Prioritäten verschieden sind, oder in Abhängigkeit der jeweiligen zweiten Priorität, wenn die jeweiligen ersten Prioritäten gleich sind,
- Setzen (211b) eines Flags, insbesondere eines New-Flags, in einem zu übertragenden Informationsblock (60), und/oder Senden eines Interrupts an die Recheneinheit (20; 20_1 bis 20_n), wobei insbesondere das New-Flag bzw. optional der Interrupt dazu vorgesehen ist, der Recheneinheit (20; 20_1 bis 20_n) eine erfolgte Übertragung des Informationsblocks (60) an den Arbeitsspeicher (30; 30_1 bis 30_n) mitzuteilen,
- Ermitteln (211a) eines Ziel-Adressbereichs in dem Arbeitsspeicher (30) und/oder Ermitteln einer lokalen Arbeitsspeicher-Einheit (30_1 bis 30_n) des Arbeitsspeichers (30; 30_1 bis 30_n),
- Senden (214) eines Quittungssignals an das und/oder Setzen eines Flags in dem Kommunikationsmodul (50) für eine erfolgreiche Übertragung eines Informationsblocks (60) von dem Kommunikationsmodul (50) zu dem Arbeitsspeicher (30; 30_1 bis 30_n).

5. Speicherdirektzugriffssteuereinrichtung (40) nach wenigstens einem der vorstehenden Ansprüche, wobei die Speicherdirektzugriffssteuereinrichtung (40) zur Ausführung der folgenden Schritte ausgebildet ist:

- Einlesen (104) von Steuerinformationen von wenigstens einem in dem Arbeitsspeicher (30; 30_1 bis 30_n) gespeicherten ersten Informationsblock (60), welcher von der Recheneinheit (20; 20_1 bis 20_n) zur Übertragung an das mit dem Bussystem (12) verbundene Kommunikationsmodul (50) vorgesehen ist, wobei die Steuerinformationen eine Priorität des wenigstens einen ersten Informationsblocks (60) für die Übertragung an das Kommunikationsmodul (50) charakterisieren,
- Einlesen (204) von Steuerinformationen von wenigstens einem von dem Kommunikationsmodul (50) bereit gestellten zweiten Informationsblock (60), welcher von dem Kommunikationsmodul (50) zur Übertragung an den mit dem Bussystem (12) verbundenen Arbeitsspeicher (30; 30_1 bis 30_n) vorgesehen ist, wobei diese Steuerinformationen eine Priorität des wenigstens einen zweiten Informationsblocks (60) für die Übertragung an den Arbeitsspeicher (30; 30_1 bis 30_n) charakterisieren,
- Ermitteln (310) einer Reihenfolge für die Übertragung des wenigstens einen ersten Informationsblocks (60) und des wenigstens einen zweiten Informationsblocks (60) in Abhängigkeit der jeweiligen Priorität des wenigstens einen ersten und wenigstens einen zweiten Informationsblocks (60),

- Übertragen (112) des wenigstens einen ersten Informationsblocks (60) von dem Arbeitsspeicher (30; 30_1 bis 30_n) zu dem Kommunikationsmodul (50) und/oder Übertragen (212) des wenigstens einen zweiten Informationsblocks (60) von dem Kommunikationsmodul (50) zu dem Arbeitsspeicher (30; 30_1 bis 30_n) gemäß der ermittelten Reihenfolge unter Verwendung eines Speicherdirektzugriffs.

6. Speicherdirektzugriffssteuereinrichtung (40) nach wenigstens einem der vorstehenden Ansprüche, wobei die Speicherdirektzugriffssteuereinrichtung (40) zweite Konfigurationsinformationen umfasst, und wobei die zweiten Konfigurationsinformationen jeweilige mit dem Kommunikationsmodul (50) kommunizierende logische Einheiten und/oder von den jeweiligen logischen Einheiten zu sendende und/oder zu empfangene Steuerinformationen charakterisieren.

7. Speicherdirektzugriffssteuereinrichtung (40) nach wenigstens einem der vorstehenden Ansprüche, wobei die Speicherdirektzugriffssteuereinrichtung (40) dritte Konfigurationsinformationen umfasst, und wobei die dritten Konfigurationsinformationen die Recheneinheit (20; 20_1 bis 20_n) und/oder den Arbeitsspeicher (30; 30_1 bis 30_n) charakterisierende Größen umfassen.

8. Speicherdirektzugriffssteuereinrichtung (40) nach wenigstens einem der vorstehenden Ansprüche, wobei die Speicherdirektzugriffssteuereinrichtung (40) vierte Konfigurationsinformationen umfasst, und wobei die vierten Konfigurationsinformationen eine jeweilige Quelle und/oder ein jeweiliges Ziel für die Übertragung der Informationsblöcke (60) charakterisieren.

9. Verfahren zum Betreiben einer Speicherdirektzugriffssteuereinrichtung (40) für eine einen Arbeitsspeicher (30; 30_1 bis 30_n) aufweisende Recheneinheit (20; 20_1 bis 20_n), wobei die Speicherdirektzugriffssteuereinrichtung (40) einen Anschluss zur Verbindung der Speicherdirektzugriffssteuereinrichtung (40) mit einem die Recheneinheit (20; 20_1 bis 20_n) mit dem Arbeitsspeicher (30; 30_1 bis 30_n) verbindenden Bussystem (12) aufweist, **dadurch gekennzeichnet, dass** das Verfahren die folgenden Schritte umfasst:

- Einlesen (104) von Steuerinformationen von wenigstens zwei in dem Arbeitsspeicher (30; 30_1 bis 30_n) gespeicherten Informationsblöcken (60), welche von der Recheneinheit (20; 20_1 bis 20_n) zur Übertragung an ein mit dem Bussystem (12) verbundenes Kommunikationsmodul (50) vorgesehen sind, wobei die Steuerinformationen eine Priorität des jeweiligen Informationsblocks (60) für die Übertragung an das Kommunikationsmodul (50) charakterisieren,
- Ermitteln (110) einer Reihenfolge für die Übertragung der Informationsblöcke (60) zu dem Kommunikationsmodul (50) in Abhängigkeit der jeweiligen Priorität,
- Übertragen (112) der Informationsblöcke (60) von dem Arbeitsspeicher (30; 30_1 bis 30_n) zu dem Kommunikationsmodul (50) gemäß der ermittelten Reihenfolge unter Verwendung eines Speicherdirektzugriffs von dem Arbeitsspeicher (30; 30_1 bis 30_n) zu dem Kommunikationsmodul (50).

10. Verfahren nach Anspruch 9, wobei das Verfahren mindestens einen der folgenden weiteren Schritte umfasst:

- Empfangen (102) eines Signals, insbesondere eines Triggersignals, und/oder eines ACK-Bits, englisch "acknowledge", und/oder eines Interrupts, von der Recheneinheit (20; 20_1 bis 20_n),
- Einlesen (104) der Steuerinformationen in Abhängigkeit von dem empfangenen Signal,
- Auswerten (106) von eine Prioritätsauswertung steuernden ersten Konfigurationsinformationen,
- Ermitteln (108) einer ersten Priorität und/oder einer zweiten Priorität aus den Steuerinformationen,
- Ermitteln (110a, 110b, 110c) der Reihenfolge für die Übertragung der Informationsblöcke (60) zu dem Kommunikationsmodul (50) in Abhängigkeit von den ersten Konfigurationsinformationen und von den jeweiligen ersten und/oder jeweiligen zweiten Prioritäten, wobei die Reihenfolge optional in Abhängigkeit von den jeweiligen ersten Prioritäten oder von den jeweiligen zweiten Prioritäten oder von den jeweiligen ersten und jeweiligen zweiten Prioritäten ermittelt wird, insbesondere Ermitteln (110a, 110b, 110c) der Reihenfolge für die Übertragung der Informationsblöcke (60) zu dem Kommunikationsmodul (50) in Abhängigkeit der jeweiligen ersten Priorität, wenn die jeweiligen ersten Prioritäten verschieden sind, oder in Abhängigkeit der jeweiligen zweiten Priorität, wenn die jeweiligen ersten Prioritäten gleich sind,
- Übermitteln einer Übertragungs-Anfrage von der Speicherdirektzugriffssteuereinrichtung (10) an das Kommunikationsmodul (50),
- Senden (114) eines Quittungssignals an die Recheneinheit (20; 20_1 bis 20_n) und/oder Setzen bzw. Rücksetzen eines Flags in einem Informationsblock (60) für eine erfolgreiche Übertragung des Informationsblocks (60) von dem Arbeitsspeicher (30; 30_1 bis 30_n) zu dem Kommunikationsmodul (50).

**11.** Verfahren nach Anspruch 9 oder 10, wobei das Verfahren die folgenden Schritte umfasst:

- Einlesen (204) von Steuerinformationen von wenigstens zwei von dem Kommunikationsmodul (50) bereit gestellten Informationsblöcken (60), welche von dem Kommunikationsmodul (50) zur Übertragung an den mit dem Bussystem (12) verbundenen Arbeitsspeicher (30; 30_1 bis 30_n) vorgesehen sind, wobei diese Steuerinformationen eine Priorität des jeweiligen Informationsblocks (60) für die Übertragung an den Arbeitsspeicher (30; 30_1 bis 30_n) charakterisieren,
- Ermitteln (210) einer Reihenfolge für die Übertragung der Informationsblöcke (60) zu dem Arbeitsspeicher (30; 30_1 bis 30_n) in Abhängigkeit der jeweiligen Priorität,
- Übertragen (212) der Informationsblöcke (60) von dem Kommunikationsmodul (50) zu dem Arbeitsspeicher (30; 30_1 bis 30_n) gemäß der ermittelten Reihenfolge unter Verwendung eines Speicherdirektzugriffs von dem Kommunikationsmodul (50) zu dem Arbeitsspeicher (30; 30_1 bis 30_n).

**Claims**

1.  Direct memory access controller (40) for a computing unit (20; 20_1 to 20_n) having a working memory (30; 30-1 to 30_n), wherein the direct memory access controller (40) has a terminal for connecting the direct memory access controller (40) to a bus system (12) that connects the computing unit (20; 20_1 to 20_n) to the working memory (30; 30_1 to 30n), **characterized in that** the direct memory access controller (40) is designed to perform the following steps:

    - reading in (104) control information from at least two information blocks (60) stored in the working memory (30; 30_1 to 30_n) and that are provided by the computing unit (20; 20_1 to 20_n) for transmission to a communication module (50) connected to the bus system (12), wherein the control information characterizes a priority of the respective information block (60) for the transmission to the communication module (50),
    - determining (110) an order for the transmission of the information blocks (60) to the communication module (50) depending on the respective priority,
    - transmitting (112) the information blocks (60) from the working memory (30; 30_1 to 30_n) to the communication module (50) according to the determined order using direct memory access from the working memory (30; 30_1 to 30_n) to the communication module (50) .

2.  Direct memory access controller (40) according to Claim 1, wherein the direct memory access controller (40) is designed to perform at least one of the following further steps:

    - receiving (102) a signal, in particular a trigger signal, and/or an ACK (acknowledge) bit, and/or an interrupt from the computing unit (20; 20_1 to 20_n),
    - reading in (104) the control information depending on the received signal,
    - evaluating (106) first configuration information controlling a priority evaluation,
    - determining (108) a first priority and/or a second priority from the control information,
    - determining (110a, 110b, 110c) the order for the transmission of the information blocks (60) to the communication module (50) depending on the first configuration information and on the respective first and/or respective second priorities, wherein the order is optionally determined depending on the respective first priorities or on the respective second priorities or on the respective first and respective second priorities, in particular determining (110a, 110b, 110c) the order for the transmission of the information blocks (60) to the communication module (50) depending on the respective first priority when the respective first priorities are different, or depending on the respective second priority when the respective first priorities are the same,
    - transmitting a transmission request from the direct memory access controller (10) to the communication module (50),
    - transmitting (114) an acknowledgement signal to the computing unit (20; 20_1 to 20_n) and/or setting or resetting a flag in an information block (60) for successful transmission of the information block (60) from the working memory (30; 30_1 to 30_n) to the communication module (50).

3.  Direct memory access controller (40) according to Claim 1 or 2, wherein the direct memory access controller (40) is designed to perform the following steps:

    - reading in (204) control information from at least two information blocks (60) provided by the communication module (50) and that are provided by the communication module (50) for transmission to the working memory (30; 30_1 to 30_n) connected to the bus system (12), wherein this control information characterizes a priority of the respective information block (60) for the transmission to the working memory (30; 30_1 to 30_n),
- determining (210) an order for the transmission of the information blocks (60) to the working memory (30; 30_1 to 30_n) depending on the respective priority,
- transmitting (212) the information blocks (60) from the communication module (50) to the working memory (30; 30_1 to 30_n) according to the determined order using direct memory access from the communication module (50) to the working memory (30; 30_1 to 30_n).

4. Direct memory access controller (40) according to Claim 3, wherein the direct memory access controller (40) is designed to perform at least one of the following further steps:

- receiving (202) a signal, in particular a trigger signal, from the communication module (50), as a result of which the direct memory access controller (10) is in particular able to be prompted to subsequently read in the control information,
- reading in (204) the control information, in particular from the at least two information blocks (60) provided by the communication module (50), depending on the received signal,
- evaluating (206) first configuration information controlling a priority evaluation,
- determining (208) a first priority and/or a second priority from the control information,
- determining (210a, 210b, 210c) the order for the transmission of the information blocks (60) to the working memory (30; 30_1 to 30_n) depending on the first configuration information and on the respective first and/or respective second priorities, wherein the order is optionally determined depending on the respective first priorities or on the respective second priorities or on the respective first and respective second priorities, in particular determining (210a, 210b, 210c) the order for the transmission of the information blocks (60) to the working memory (30; 30_1 to 30_n) depending on the respective first priority when the respective first priorities are different, or depending on the respective second priority when the respective first priorities are the same,
- setting (211b) a flag, in particular a new flag, in an information block (60) to be transmitted, and/or transmitting an interrupt to the computing unit (20; 20_1 to 20_n), wherein the new flag or optionally the interrupt is intended to communicate to the computer unit (20; 20_1 to 20_n) the fact that the information block (60) has been transmitted to the working memory (30; 30_1 to 30_n),
- determining (211a) a destination address range in the working memory (30) and/or determining a local working memory unit (30_1 to 30_n) of the working memory (30; 30_1 to 30_n),
- transmitting (214) an acknowledgement signal to the and/or setting a flag in the communication module (50) for successful transmission of an information block (60) from the communication module (50) to the working memory (30; 30_1 to 30_n).

5. Direct memory access controller (40) according to at least one of the preceding claims, wherein the direct memory access controller (40) is designed to perform the following steps:

- reading in (104) control information from at least one first information block (60) stored in the working memory (30; 30_1 to 30_n) and that is provided by the computing unit (20; 20_1 to 20_n) for transmission to the communication module (50) connected to the bus system (12), wherein the control information characterizes a priority of the at least one first information block (60) for the transmission to the communication module (50),
- reading in (204) control information from at least one second information block (60) provided by the communication module (50) and that is provided by the communication module (50) for transmission to the working memory (30; 30_1 to 30_n) connected to the bus system (12), wherein this control information characterizes a priority of the at least one second information block (60) for the transmission to the working memory (30; 30_1 to 30_n),
- determining (310) an order for the transmission of the at least one first information block (60) and the at least one second information block (60) depending on the respective priority of the at least one first and at least one second information block (60),
- transmitting (112) the at least one first information block (60) from the working memory (30; 30_1 to 30_n) to the communication module (50) and/or transmitting (212) the at least one second information block (60) from the communication module (50) to the working memory (30; 30_1 to 30_n) according to the determined order using direct memory access.

6. Direct memory access controller (40) according to at least one of the preceding claims, wherein the direct memory access controller (40) comprises second configuration information, and wherein the second configuration information characterizes respective logic units communicating with the communication module (50) and/or control information to be transmitted and/or to be received by the respective logic units.

7.  Direct memory access controller (40) according to at least one of the preceding claims, wherein the direct memory access controller (40) comprises third configuration information (40), and wherein the third configuration information comprises variables characterizing the computing unit (20; 20_1 to 20_n) and/or the working memory (30; 30_1 to 30_n).

8.  Direct memory access controller (40) according to at least one of the preceding claims, wherein the direct memory access controller (40) comprises fourth configuration information, and wherein the fourth configuration information characterizes a respective source and/or a respective destination for the transmission of the information blocks (60).

9.  Method for operating a direct memory access controller (40) for a computing unit (20; 20_1 to 20_n) having a working memory (30; 30_1 to 30_n), wherein the direct memory access controller (40) has a terminal for connecting the direct memory access controller (40) to a bus system (12) that connects the computing unit (20; 20_1 to 20_n) to the working memory (30; 30_1 to 30n), **characterized in that** the method comprises the following steps:

    - reading in (104) control information from at least two information blocks (60) stored in the working memory (30; 30_1 to 30_n) and that are provided by the computing unit (20; 20_1 to 20_n) for transmission to a communication module (50) connected to the bus system (12), wherein the control information characterizes a priority of the respective information block (60) for the transmission to the communication module (50),
    - determining (110) an order for the transmission of the information blocks (60) to the communication module (50) depending on the respective priority,
    - transmitting (112) the information blocks (60) from the working memory (30; 30_1 to 30_n) to the communication module (50) according to the determined order using direct memory access from the working memory (30; 30_1 to 30_n) to the communication module (50) .

10.  Method according to Claim 9, wherein the method comprises at least one of the following further steps:

    - receiving (102) a signal, in particular a trigger signal, and/or an ACK (acknowledge) bit, and/or an interrupt from the computing unit (20; 20_1 to 20_n),
    - reading in (104) the control information depending on the received signal,
    - evaluating (106) first configuration information controlling a priority evaluation,
    - determining (108) a first priority and/or a second priority from the control information,
    - determining (110a, 110b, 110c) the order for the transmission of the information blocks (60) to the communication module (50) depending on the first configuration information and on the respective first and/or respective second priorities, wherein the order is optionally determined depending on the respective first priorities or on the respective second priorities or on the respective first and respective second priorities, in particular determining (110a, 110b, 110c) the order for the transmission of the information blocks (60) to the communication module (50) depending on the respective first priority when the respective first priorities are different, or depending on the respective second priority when the respective first priorities are the same,
    - transmitting a transmission request from the direct memory access controller (10) to the communication module (50),
    - transmitting (114) an acknowledgement signal to the computing unit (20; 20_1 to 20_n) and/or setting or resetting a flag in an information block (60) for a successful transmission of the information block (60) from the working memory (30; 30_1 to 30_n) to the communication module (50).

11.  Method according to Claim 9 or 10, wherein the method comprises the following steps:

    - reading in (204) control information from at least two information blocks (60) provided by the communication module (50) and that are provided by the communication module (50) for transmission to the working memory (30; 30_1 to 30_n) connected to the bus system (12), wherein this control information characterizes a priority of the respective information block (60) for the transmission to the working memory (30; 30_1 to 30_n),
    - determining (210) an order for the transmission of the information blocks (60) to the working memory (30; 30_1 to 30_n) depending on the respective priority,
    - transmitting (212) the information blocks (60) from the communication module (50) to the working memory (30; 30_1 to 30_n) according to the determined order using direct memory access from the communication module (50) to the working memory (30; 30_1 to 30_n).

**Revendications**

1. Dispositif de commande d'accès direct en mémoire (40) pour une unité de calcul (20; 20_1 à 20_n) présentant une mémoire vive (30 ; 30_1 à 30_n), le dispositif de commande d'accès direct en mémoire (40) présentant une connexion pour relier le dispositif de commande d'accès direct en mémoire (40) à un système de bus (12) reliant l'unité de calcul (20 ; 20_1 à 20_n) à la mémoire vive (30 ; 30_1 à 30_n), **caractérisé en ce que** le dispositif de commande d'accès direct en mémoire (40) est réalisé pour effectuer les étapes suivantes consistant à :

   - lire (104) des informations de commande d'au moins deux blocs d'information (60) stockés dans la mémoire vive (30 ; 30_1 à 30_n) et prévus pour être transmis de l'unité de calcul (20 ; 20_1 à 20_n) à un module de communication (50) relié au système de bus (12), les informations de commande caractérisant une priorité du bloc d'information (60) respectif pour la transmission au module de communication (50),
   - déterminer (110) une séquence pour la transmission des blocs d'information (60) au module de communication (50) en fonction de la priorité respective,
   - transmettre (112) les blocs d'information (60) de la mémoire vive (30 ; 30_1 à 30_n) au module de communication (50) selon la séquence déterminée en utilisant un accès direct en mémoire de la mémoire vive (30 ; 30_1 à 30_n) au module de communication (50).

2. Dispositif de commande d'accès direct en mémoire (40) selon la revendication 1, dans lequel le dispositif de commande d'accès direct en mémoire (40) est réalisé pour effectuer au moins l'une des étapes supplémentaires suivantes consistant à :

   - recevoir (102) un signal, en particulier un signal de déclenchement, et/ou un bit ACK, en anglais « acknowledge », et/ou une interruption de l'unité de calcul (20 ; 20_1 à 20_n),
   - lire (104) les informations de commande en fonction du signal reçu,
   - évaluer (106) une première information de configuration commandant une évaluation de priorité,
   - déterminer (108) une première priorité et/ou une deuxième priorité à partir des informations de commande,
   - déterminer (110a, 110b, 110c) la séquence pour la transmission des blocs d'information (60) au module de communication (50) en fonction des premières informations de configuration et des premières priorités respectives et/ou des deuxièmes priorités respectives, la séquence étant déterminée en option en fonction des premières priorités respectives ou des deuxièmes priorités respectives ou à partir des premières priorités respectives et des deuxièmes priorités respectives, en particulier déterminer (110a, 110b, 110c) la séquence pour la transmission des blocs d'information (60) au module de communication (50) en fonction de la première priorité respective si les premières priorités respectives sont différentes, ou en fonction de la deuxième priorité respective si les premières priorités respectives sont identiques,
   - transmettre une demande de transmission du dispositif de commande d'accès direct en mémoire (10) au module de communication (50),
   - envoyer (114) un signal d'accusé de réception à l'unité de calcul (20 ; 20_1 à 20_n) et/ou initialiser ou réinitialiser un drapeau dans un bloc d'information (60) pour une transmission réussie du bloc d'information (60) de la mémoire vive (30 ; 30_1 à 30_n) au module de communication (50).

3. Dispositif de commande d'accès direct en mémoire (40) selon la revendication 1 ou 2, dans lequel le dispositif de commande d'accès direct en mémoire (40) est réalisé pour effectuer les étapes suivantes consistant à :

   - lire (204) des informations de commande d'au moins deux blocs d'information (60) fournis par le module de communication (50) qui sont prévus par le module de communication (50) pour être transmis à la mémoire vive (30 ; 30_1 à 30_n) reliée au système de bus (12), ces informations de commande caractérisant une priorité du bloc d'information respectif (60) pour la transmission à la mémoire vive (30 ; 30_1 à 30_n),
   - déterminer (210) une séquence pour la transmission des blocs d'information (60) à la mémoire vive (30; 30_1 à 30_n) en fonction de la priorité respective,
   - transmettre (212) les blocs d'information (60) du module de communication (50) à la mémoire vive (30 ; 30_1 à 30_n) selon la séquence déterminée en utilisant un accès direct en mémoire du module de communication (50) à la mémoire vive (30 ; 30_1 à 30_n).

4. Dispositif de commande d'accès direct en mémoire (40) selon la revendication 3, dans lequel le dispositif de commande d'accès direct en mémoire (40) est réalisé pour effectuer au moins l'une des étapes supplémentaires suivantes consistant à :

- recevoir (202) un signal, en particulier un signal de déclenchement, du module de communication (50), de sorte qu'en particulier le dispositif de commande d'accès direct en mémoire (10) peut être amené à effectuer ensuite la lecture des informations de commande,
- lire (204) les informations de commande, en particulier les au moins deux blocs d'information (60) fournis par le module de communication (50), en fonction du signal reçu,
- évaluer (206) des premières informations de configuration commandant une évaluation de priorité,
- déterminer (208) une première priorité et/ou une deuxième priorité à partir des informations de commande,
- déterminer (210a, 210b, 210c) la séquence pour la transmission des blocs d'information (60) à la mémoire vive (30 ; 30_1 à 30_n) en fonction des premières informations de configuration et des premières priorités respectives et/ou des deuxièmes priorités respectives, la séquence étant en option déterminée en fonction des premières priorités respectives ou des deuxièmes priorités respectives ou à partir des premières priorités respectives et des deuxièmes priorités respectives, en particulier déterminer (210a, 210b, 210c) la séquence pour la transmission des blocs d'information (60) à la mémoire vive (30; 30_1 à 30_n) en fonction de la première priorité respective si les premières priorités respectives sont différentes, ou en fonction de la deuxième priorité respective si les premières priorités respectives sont identiques,
- initialiser (211b) un drapeau, en particulier un drapeau New, dans un bloc d'information (60) à transmettre, et/ou envoyer une interruption à l'unité de calcul (20 ; 20_1 à 20_n), en particulier le drapeau New ou en option l'interruption étant prévu(e) pour communiquer à l'unité de calcul (20 ; 20_1 à 20_n) une transmission effectuée du bloc d'information (60) à la mémoire vive (30 ; 30_1 à 30_n),
- déterminer (211a) une zone d'adresse de destination dans la mémoire vive (30) et/ou déterminer une unité de mémoire vive locale (30_1 à 30_n) de la mémoire vive (30 ; 30_1 à 30_n),
- envoyer (214) un signal d'accusé de réception au, et/ou initialiser un drapeau dans le module de communication (50) pour une transmission réussie d'un bloc d'information (60) du module de communication (50) à la mémoire vive (30 ; 30_1 à 30_n).

5. Dispositif de commande d'accès direct en mémoire (40) selon au moins l'une des revendications précédentes, le dispositif de commande d'accès direct en mémoire (40) étant réalisé pour effectuer les étapes suivantes consistant à :

- lire (104) des informations de commande d'au moins un premier bloc d'information (60) stocké dans la mémoire vive (30 ; 30_1 à 30_n) et qui est prévu par l'unité de calcul (20 ; 20_1 à 20_n) pour la transmission au module de communication (50) relié au système de bus (12), les informations de commande caractérisant une priorité dudit au moins un premier bloc d'information (60) pour la transmission au module de communication (50),
- lire (204) des informations de commande d'au moins un deuxième bloc de communication (60) fourni par le module de communication (50) qui est prévu par le module de communication (50) pour la transmission à la mémoire vive (30 ; 30_1 à 30_n) reliée au système de bus (12), ces informations de commande caractérisant une priorité dudit au moins un deuxième bloc d'information (60) pour la transmission à la mémoire vive (30 ; 30_1 à 30_n),
- déterminer (310) une séquence pour la transmission dudit au moins un premier bloc d'information (60) et dudit au moins un deuxième bloc d'information (60) en fonction de la priorité respective dudit au moins un premier et dudit au moins un deuxième bloc d'information (60),
- transmettre (112) ledit au moins un premier bloc d'information (60) de la mémoire vive (30 ; 30_1 à 30_n) au module de communication (50) et/ou transmettre (212) ledit au moins un deuxième bloc d'information (60) du module de communication (50) à la mémoire vive (30; 30_1 à 30_n) selon la séquence déterminée en utilisant un accès direct en mémoire.

6. Dispositif de commande d'accès direct en mémoire (40) selon au moins l'une des revendications précédentes, dans lequel le dispositif de commande d'accès direct en mémoire (40) comprend des deuxièmes informations de configuration, et dans lequel les deuxièmes informations de configuration caractérisent des unités logiques respectives en communication avec le module de communication (50) et/ou des informations de commande à envoyer et/ou à recevoir par les unités logiques respectives.

7. Dispositif de commande d'accès direct en mémoire (40) selon au moins l'une des revendications précédentes, dans lequel le dispositif de commande d'accès direct en mémoire (40) comprend des troisièmes informations de configuration, et dans lequel les troisièmes informations de configuration comprennent des grandeurs caractérisant l'unité de calcul (20 ; 20_1 à 20_n) et/ou la mémoire vive (30 ; 30_1 à 30_n).

8. Dispositif de commande d'accès direct en mémoire (40) selon au moins l'une des revendications précédentes, dans lequel le dispositif de commande d'accès direct en mémoire (40) comprend des quatrièmes informations de configuration, et dans lequel les quatrièmes informations de configuration caractérisent une source respective et/ou une destination respective pour la transmission des blocs d'information (60).

9. Procédé pour faire fonctionner un dispositif de commande d'accès direct en mémoire (40) pour une unité de calcul (20; 20_1 à 20_n) présentant une mémoire vive (30 ; 30_1 à 30-n), le dispositif de commande d'accès direct en mémoire (40) présentant une connexion pour relier le dispositif de commande d'accès direct en mémoire (40) à un système de bus (12) reliant l'unité de calcul (20 ; 20_1 à 20_n) à la mémoire vive (30 ; 30_1 à 30_n), **caractérisé en ce que** le procédé comprend les étapes suivantes consistant à :

- lire (104) des informations de commande d'au moins deux blocs d'information (60) stockés dans la mémoire vive (30 ; 30_1 à 30_n) et qui sont prévus par l'unité de calcul (20; 20_1 à 20_n) pour la transmission à un module de communication (50) relié au système de bus (12), les informations de commande caractérisant une priorité du bloc d'information (60) respectif pour la transmission au module de communication (50),
- déterminer (110) une séquence pour la transmission des blocs d'information (60) au module de communication (50) en fonction de la priorité respective,
- transmettre (112) les blocs d'information (60) de la mémoire vive (30; 30_1 à 30_n) au module de communication (50) selon la séquence déterminée en utilisant un accès direct en mémoire de la mémoire vive (30 ; 30_1 à 30_n) au module de communication (50).

10. Procédé selon la revendication 9, le procédé comprenant au moins l'une des étapes supplémentaires suivantes consistant à :

- recevoir (102) un signal, en particulier un signal de déclenchement, et/ou un bit ACK, en anglais « acknowledge », et/ou une interruption, de l'unité de calcul (20 ; 20_1 à 20_n),
- lire (104) les informations de commande en fonction du signal reçu,
- évaluer (106) une première information de configuration commandant une évaluation de priorité,
- déterminer (108) une première priorité et/ou une deuxième priorité à partir des informations de commande,
- déterminer (110a, 110b, 110c) la séquence pour la transmission des blocs d'information (60) au module de communication (50) en fonction des premières informations de configuration et des premières priorités respectives et/ou des deuxièmes priorités respectives, la séquence étant déterminée en option en fonction des premières priorités respectives ou des deuxièmes priorités respectives ou à partir des premières priorités respectives et des deuxièmes priorités respectives, en particulier déterminer (110a, 110b, 110c) la séquence pour la transmission des blocs d'information (60) au module de communication (50) en fonction de la première priorité respective si les premières priorités respectives sont différentes, ou en fonction de la deuxième priorité respective si les premières priorités respectives sont identiques,
- transmettre une demande de transmission du dispositif de commande d'accès direct en mémoire (10) au module de communication (50),
- envoyer (114) un signal d'accusé de réception à l'unité de calcul (20 ; 20_1 à 20_n) et/ou initialiser ou réinitialiser un drapeau dans un bloc d'information (60) pour une transmission réussie du bloc d'information (60) de la mémoire vive (30 ; 30_1 à 30_n) au module de communication (50).

11. Procédé selon la revendication 9 ou 10, le procédé comprenant les étapes suivantes consistant à :

- lire (204) des informations de commande d'au moins deux blocs d'information (60) fournis par le module de communication (50) et qui sont prévus par le module de communication (50) pour être transmis à la mémoire vive (30 ; 30_1 à 30_n) reliée au système de bus (12), ces informations de commande caractérisant une priorité du bloc d'information respectif (60) pour la transmission à la mémoire vive (30 ; 30_1 à 30_n),
- déterminer (210) une séquence pour la transmission des blocs d'information (60) à la mémoire vive (30; 30_1 à 30_n) en fonction de la priorité respective,
- transmettre (212) les blocs d'information (60) du module de communication (50) à la mémoire vive (30 ; 30_1 à 30_n) selon la séquence déterminée en utilisant un accès direct en mémoire du module de communication (50) à la mémoire vive (30 ; 30_1 à 30_n).

10

12

20    30    40    50

**Fig. 1**

10    20

20_1    20_2    20_n

30    30_1    30_2    30_n    30

60    60    60

Tx

60

Rx

40

60

60

50

**Fig. 2**

20_1     20_2     10     20_n

20

60

60    Tx    30

Rx    60

40

60    50

**Fig. 3**

102

104

106

108

110a    110b    110c

110

112

114

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006259656 A1